# EUROPEAN PATENT APPLICATION

(11) **EP 4 773 696 A1**
(43) Date of publication of application: **08.07.2026**
(21) Application number: 24870096.5
(22) Date of filing: 02.08.2024
(51) Int. Cl.: H04W 72/12

(54) **COMMUNICATION METHOD, COMMUNICATION APPARATUS, AND STORAGE MEDIUM**

(30) Priority: 26.09.2023 CN 202311259796; 02.11.2023 CN 202311459490
(71) Applicant: HUAWEI TECHNOLOGIES CO., LTD., Shenzhen 518129 (CN)
(72) Inventor: ZHANG, Yanqing, Shenzhen, Guangdong 518129 (CN); XU, Haibo, Shenzhen, Guangdong 518129 (CN)
(74) Representative: MERH-IP Matias Erny Reichl Hoffmann Patentanwälte PartG mbB
(86) International application number: PCT/CN2024/109484
(87) International publication number: WO 2025/066547

(57) **Abstract**

This application relates to the communication field, and provides a communication method, a communication apparatus, and a storage medium. The method includes: triggering first information, and canceling the triggering of the first information when a first condition is met. The first information is used to request an uplink resource used for transmission of first data, or the first information indicates first delay information of first data. The first data corresponds to M logical channels, the M logical channels are logical channels configured to report delay information, and M is a positive integer. The first condition is related to a first uplink resource and the first data, and the first uplink resource is allocated for transmission of the first data.

## Description

This application claims priorities to Chinese Patent Application No. 202311259796.8, filed with the China National Intellectual Property Administration on September 26, 2023 and entitled "COMMUNICATION METHOD, COMMUNICATION APPARATUS, AND STORAGE MEDIUM", and claims priority to Chinese Patent Application No. 202311459490.7, filed with the China National Intellectual Property Administration on November 2, 2023 and entitled "COMMUNICATION METHOD, COMMUNICATION APPARATUS, AND STORAGE MEDIUM", which are incorporated herein by reference in their entireties.

### TECHNICAL FIELD

Embodiments of this application relate to the field of communication technologies, and in particular, to a communication method, a communication apparatus, and a storage medium.

### BACKGROUND

A terminal device (also referred to as user equipment, user equipment, UE) may trigger a delay status report (delay status report, DSR) or a scheduling request (scheduling request, SR), so that a network device can learn of a data volume of pending data and delay information of the pending data based on the DSR, or learn, based on the SR, that there is pending data on a logical channel indicated by the SR. In this way, the network device can allocate or schedule an uplink resource to the terminal device based on the DSR or the SR.

However, if the triggered DSR or SR is not canceled, the terminal device continuously sends the DSR or the SR, causing a waste of uplink resources.

### SUMMARY

To resolve the foregoing technical problem, embodiments of this application provide a communication method, a communication apparatus, and a storage medium, to cancel a DSR or an SR, so as to reduce a waste of uplink resources.

To achieve the foregoing technical objectives, the following technical solutions are used in this application.

According to a first aspect, a communication method is provided. The method may be performed by a terminal device, or may be performed by a component of the terminal device, for example, a processor, a chip, or a chip system of the terminal device, or may be implemented by a logical module or software that can implement all or some functions of the terminal device. Descriptions are provided below by using an example in which the method is performed by the terminal device. The communication method includes: triggering first information, and canceling the triggering of the first information when a first condition is met. The first information is used to request an uplink resource used for transmission of first data, or the first information indicates first delay information of first data. The first data corresponds to M logical channels, the M logical channels are logical channels configured to report delay information, and M is a positive integer. The first condition is related to a first uplink resource and the first data, and the first uplink resource is allocated for transmission of the first data.

For example, the first information includes a delay status report DSR.

For another example, the first information includes a scheduling request SR.

In embodiments of this application, because first data corresponds to M logical channels, and the M logical channels are logical channels configured to report delay information, a terminal device has a capability of reporting delay information of data on the M logical channels. In this way, the terminal device can trigger first delay information of the first data. Correspondingly, the terminal device may also trigger a request for an uplink resource of the first data corresponding to the M logical channels.

The terminal device may determine, based on the first data and the uplink resource allocated for transmission of the first data, whether a first condition is met, and cancel triggered first information when the first condition is met. The first information is used to request the uplink resource used for transmission of the first data, or the first information indicates the first delay information of the first data, to avoid continuous requesting of the uplink resource used for transmission of the first data, or continuous reporting of the first delay information of the first data, so as to reduce a waste of uplink resources.

With reference to the first aspect, in some possible designs, the first condition includes at least one of the following: The first uplink resource bears transmission of the first data, and the first data includes all pending data on the M logical channels; or the first uplink resource bears transmission of the first data, and the first data includes pending data that is on the M logical channels and whose remaining transmission delay budget is less than a threshold, where a start moment of the remaining transmission delay budget is a moment at which the first information is sent, and an end moment of the remaining transmission delay budget is a moment at which transmission of the pending data is expected to be completed, or an end moment of the remaining transmission delay budget is a moment at which the pending data is discarded.

In other words, if the first uplink resource may carry all the pending data on the M logical channels, or the first uplink resource may carry a part of pending data selected from the M logical channels based on a remaining transmission delay budget, it may indicate that the first uplink resource configured by the network device for the terminal device is proper. Because the first information reported by the terminal device is mainly used by the network device to properly allocate the first uplink resource to the terminal device, the terminal device does not need to report the first information to the network device in this case. In this way, the triggering of the first information can be canceled without affecting proper configuration of the first uplink resource, so that continuous reporting of the first information can be avoided, thereby reducing a waste of uplink resources.

With reference to the first aspect, in some possible designs, when the first information indicates the first delay information of the first data, the first condition includes: The first uplink resource bears transmission of the first data, and the first uplink resource does not bear transmission of the first information and a first subheader, where the first subheader corresponds to the first information.

In other words, for the first information that indicates the first delay information of the first data, when the first condition is determined, both a relationship between the first uplink resource and the first data and a relationship between the first uplink resource and the first information and the first subheader are considered, so that accuracy of canceling the triggering of the first information is further improved.

With reference to the first aspect, in some possible designs, when the first information is used to request an uplink resource used for transmission of first data, before the first information is triggered, the method further includes: triggering second information, where the second information indicates the first delay information of the first data; and the triggering the first information includes: triggering the first information when no uplink resource exists in a first time period, where the first time period is determined based on a moment at which the second information is triggered and preset duration.

In other words, when the first information is used to request the uplink resource used for transmission of the first data, and the terminal device has triggered the second information, if no uplink resource exists in the first time period, the terminal device triggers the first information. The terminal device determines, based on whether the uplink resource used for transmission of the first data exists in a time period, whether to trigger the first information. Therefore, incorrect triggering of the first information can be avoided as much as possible, in other words, incorrect reporting of the first information can be avoided as much as possible, thereby further reducing a waste of uplink resources.

With reference to the first aspect, in some possible designs, that no uplink resource exists in the first time period includes any one of the following: No dynamic resource indication information is received in the first time period; dynamic resource indication information is received in the first time period or before a start moment of the first time period, and a resource use time period indicated by the dynamic resource indication information is not in the first time period; or no semi-persistent uplink resource exists in the first time period.

Optionally, the uplink resource may be used for transmission of the first data.

In other words, because the dynamic resource indication information may indicate the uplink resource used for transmission of the first data, if the dynamic resource indication information is not received in the first time period, it may indicate that no uplink resource exists in the first time period. However, even if the dynamic resource indication information is received in the first time period or before the start moment of the first time period, if the resource use time period indicated by the dynamic resource indication information is not in the first time period, it may also indicate that no uplink resource exists in the first time period. Alternatively, when there is a semi-persistent scheduling configuration, the network device periodically allocates an uplink resource to the terminal device. If no semi-persistent uplink resource available for transmission of the first data exists in the first time period, it may also indicate that no uplink resource exists in the first time period. In other words, this embodiment of this application provides three implementations of determining that no uplink resource exists in the first time period, so that whether no uplink resource exists in the first time period can be determined in the foregoing two implementations.

With reference to the first aspect, in some possible designs, the triggering the first information includes: triggering the first information at an end moment of the first time period.

In other words, in this embodiment of this application, the terminal device determines, based on whether the dynamic resource indication information exists in the first time period and/or whether an uplink resource indicated by the dynamic resource indication information can be used in the first time period, whether the uplink resource exists in the first time period. Alternatively, the terminal device determines, based on whether the semi-persistent uplink resource exists in the first time period or whether the semi-persistent uplink resource can be used in the first time period, whether an uplink transmission resource exists in the first time period. In these cases, after determining information in the first time period, the terminal device may trigger the first information at the end moment of the first time period, so that the terminal device can trigger the first information in a timely manner.

With reference to the first aspect, in some possible designs, that no uplink resource exists in the first time period includes any one of the following: Dynamic resource indication information is received before a start moment of the first time period, and a resource use time period indicated by the dynamic resource indication information is not in the first time period; or no semi-persistent uplink resource exists in the first time period.

In other words, even if the dynamic resource indication information is received before the start moment of the first time period, if the resource use time period indicated by the dynamic resource indication information is not in the first time period, it may also indicate that no uplink resource exists in the first time period. In addition, even if the semi-persistent resource indication information is received before the start moment of the first time period, if the resource use time period indicated by the semi-persistent resource indication information is not in the first time period, it may also indicate that no uplink resource exists in the first time period. In other words, this embodiment of this application provides other two implementations of determining that no uplink resource exists in the first time period, so that whether no uplink resource exists in the first time period can be determined in the foregoing two implementations.

With reference to the first aspect, in some possible designs, the triggering the first information includes: triggering the first information at the start moment of the first time period.

In other words, in this embodiment of this application, the terminal device may determine, based on whether an uplink resource indicated by the dynamic resource indication information or the semi-persistent resource indication information received before the start moment of the first time period can be used in the first time period, whether the uplink resource exists in the first time period. In this case, the terminal device determines, before the start moment of the first time period, whether the uplink resource exists in the first time period. In this way, the first information can be triggered at the start moment of the first time period, so that the terminal device can trigger the first information in advance.

Optionally, that an uplink resource available for transmission of the first data exists in the first time period may be understood as that there are two conditions: 1. An uplink resource exists in the first time period. 2. The uplink resource can be used for transmission of the first data. For example, when an uplink resource exists in the first time period, but the uplink resource cannot be used for transmission of the first data, for example, transmission of data on a logical channel to which the first data belongs is not allowed on the uplink resource, it may also be understood that no uplink resource exists in the first time period.

With reference to the first aspect, in some possible designs, the first information includes a first DSR and a second DSR, the first DSR is a DSR triggered when first pending data meets a first configuration condition, the second DSR is a DSR triggered when second pending data meets a second configuration condition, the first pending data is pending data on a first logical channel, the second pending data is pending data on a second logical channel, and both the first logical channel and the second logical channel are in the M logical channels; and the canceling the triggering of the first information when the first condition is met includes: canceling the first DSR and the second DSR when the first condition is met.

In other words, the terminal device may trigger a plurality of DSRs, and when the first condition is met, the terminal device may cancel the triggering of the plurality of DSRs. In this way, efficiency of canceling the triggering of the DSRs can be improved.

With reference to the first aspect, in some possible designs, the DSR includes delay information of pending data on the M logical channels.

In other words, when the first information includes the DSR, and the DSR includes the delay information of the pending data on the M logical channels, if the terminal device cancels the triggering of the first information, the terminal device may also cancel the delay information of the pending data on the M logical channels, so that signaling overheads caused by a plurality of cancellation operations are reduced.

Optionally, the DSR may include the delay information of the pending data on the M logical channels, and does not include delay information of pending data on a logical channel other than the M logical channels. In this way, another logical channel is not affected.

With reference to the first aspect, in some possible designs, the first information includes a first SR and a second SR, the first SR is an SR triggered when the first pending data meets a third configuration condition, the second SR is an SR triggered when the second pending data meets a fourth configuration condition, the first pending data is pending data on the first logical channel, the second pending data is pending data on the second logical channel, and both the first logical channel and the second logical channel are in the M logical channels; and the canceling the triggering of the first information when the first condition is met includes: canceling the first SR and the second SR when the first condition is met.

In other words, the terminal device may trigger a plurality of SRs, and when the first condition is met, the terminal device may cancel the triggering of the plurality of SRs. In this way, efficiency of canceling the triggering of the SRs can be improved.

With reference to the first aspect, in some possible designs, when the first logical channel is the same as the second logical channel, an arrival moment of the first pending data is earlier than an arrival moment of the second pending data.

In other words, the first pending data and the second pending data may be data on a same logical channel at different moments.

With reference to the first aspect, in some possible designs, the M logical channels are all logical channels configured to report the delay information.

In this embodiment of this application, that the M logical channels are configured to report the delay information may be understood as that the delay information of the pending data on the M logical channels is reported in the DSR.

In other words, because the first data corresponds to the M logical channels, and the first information corresponds to the first data, it may indicate that the first information corresponds to the M logical channels. If the M logical channels are all logical channels configured to report the delay information, the first information may completely correspond to the M logical channels. In this case, if the terminal device cancels the triggering of the first information, first information corresponding to all the logical channels configured to report the delay information may be completely canceled, to reduce a possibility of wasting uplink resources.

With reference to the first aspect, in a possible design, same first SR configuration information is configured for all of the M logical channels, where the first SR configuration information indicates an SR parameter triggered when a DSR needs to be sent; or second SR configuration information is configured for the first logical channel, and third SR configuration information is configured for the second logical channel, where the second SR configuration information indicates an SR parameter triggered when the first logical channel has a DSR to be sent, and the third SR configuration information indicates an SR parameter triggered when the second logical channel has a DSR to be sent. In other words, this embodiment of this application provides two methods for configuring information for an SR corresponding to a DSR, so that the terminal device can better distinguish between types of the SR.

According to a second aspect, a communication apparatus is provided, configured to implement the method according to the first aspect or any implementation of the first aspect. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects or the possible implementations of the foregoing aspects.

In some possible designs, the transceiver module may include a transceiver circuit, a transceiver machine, a transceiver, or a communication interface.

In some possible designs, the communication apparatus includes user equipment UE or a chip.

According to a third aspect, a communication apparatus is provided, including a processor and a memory. The memory is configured to store computer instructions, and when the processor executes the instructions, the communication apparatus is caused to perform the method according to the first aspect or any implementation of the first aspect.

According to a fourth aspect, a communication apparatus is provided, including a processor and a communication interface. The communication interface is configured to communicate with a module other than the communication apparatus, and the processor is configured to execute a computer program or instructions, the communication apparatus is caused to perform the method according to the first aspect or any implementation of the first aspect.

According to a fifth aspect, a communication apparatus is provided, including at least one processor. The processor is configured to execute a computer program or instructions stored in a memory, the communication apparatus is caused to perform the method according to the first aspect or any implementation of the first aspect. The memory may be coupled to the processor, or may be independent of the processor.

According to a sixth aspect, a computer-readable storage medium is provided. The computer-readable storage medium stores a computer program or instructions. When the computer program or instructions are run on a communication apparatus, the communication apparatus is caused to perform the method according to the first aspect or any implementation of the first aspect.

According to a seventh aspect, a computer program is provided. When the computer program is run, the method according to the first aspect or any implementation of the first aspect is performed.

According to an eighth aspect, a computer program product is provided. The computer program product includes computer instructions or a computer program. When the computer instructions or the computer program is run, the method according to the first aspect or any implementation of the first aspect is performed.

According to a ninth aspect, a communication apparatus (for example, the communication apparatus may be a chip or a chip system) is provided. The communication apparatus includes a processor, configured to implement a function in the method according to the first aspect or any implementation of the first aspect.

In some possible designs, the communication apparatus includes a memory, and the memory is configured to store necessary program instructions and data.

In some possible designs, when the apparatus is a chip system, the apparatus may include a chip, or may include a chip and another discrete device.

The communication apparatus may be a terminal device, or an apparatus included in the terminal device, for example, a chip or a chip system.

It may be understood that when the communication apparatus is a chip, a sending action/function of the communication apparatus may be understood as outputting information, and a receiving action/function of the communication apparatus may be understood as inputting information.

For technical effects brought by any possible implementation of the second aspect to the ninth aspect, refer to technical effects brought by different implementations of the first aspect. Details are not described herein again.

### BRIEF DESCRIPTION OF DRAWINGS

FIG. 1 is a diagram of a structure of a buffer status report according to an embodiment of this application;
FIG. 2 is a diagram of a structure of another buffer status report according to an embodiment of this application;
FIG. 3 is a diagram of a structure of a status report according to an embodiment of this application;
FIG. 4 is a diagram of a structure of another status report according to an embodiment of this application;
FIG. 5 is a diagram of an architecture of a communication system according to an embodiment of this application;
FIG. 6 is a diagram of an architecture of another communication system according to an embodiment of this application;
FIG. 7 is a diagram of a structure of a communication apparatus according to this application;
FIG. 8 is a diagram of a structure of a terminal device according to this application;
FIG. 9 is a schematic flowchart of a communication method according to an embodiment of this application;
FIG. 10 is a diagram of moments for triggering and canceling the triggering of SRs and DSRs according to an embodiment of this application;
FIG. 11 is a schematic flowchart of another communication method according to an embodiment of this application; and
FIG. 12 is a diagram of a structure of another terminal device according to this application.

### DESCRIPTION OF EMBODIMENTS

For ease of understanding of technical solutions provided in embodiments of this application, technologies related to this application are first described briefly.

### 1. Extended reality (eXtended Reality, XR) professional (professional, pro) service

The XR pro service is a delay-sensitive service. In other words, the XR pro service requires a low delay. For example, a downlink transmission delay budget of XR pro service data is usually 10 milliseconds (ms). In other words, maximum downlink transmission time of the XR pro service data on an air interface is 10 ms. It is assumed that a moment at which the XR pro service data earliest arrives at a user plane function (user plane function, UPF) network element is used as a downlink start moment, and a moment at which all XR pro service data is successfully transmitted to a terminal device is used as a downlink end moment. It can be learned from the foregoing requirement that maximum duration between the downlink start moment and the downlink end moment is 10 ms. For another example, an uplink transmission delay budget of XR pro service data is usually 30 ms. In other words, maximum uplink transmission time of the XR pro service data on an air interface is 30 ms. It may be assumed that a moment at which the XR pro service data earliest arrives at a terminal device is used as an uplink start moment, and a moment at which all XR pro service data is successfully transmitted to a UPF is used as an uplink end moment. It can be learned from the foregoing requirement that maximum duration between the uplink start moment and the uplink end moment is 30 ms.

It should be noted that a real-time broadband communication (real-time broadband communication, RTBC) scenario of a 5th generation mobile communication technology (5th generation mobile communication technology, 5G) aims to implement low-delay, high-reliability, and high-bandwidth communication interaction, to ensure an immersive experience effect during interaction between a person and a virtual world, with the goals of low delay, high reliability, and high bandwidth. Therefore, the XR pro service that requires a low delay may be used as a typical service in the RTBC scenario.

In some possible implementations, the XR pro service may be used for transmission of a plurality of types of data, for example, video data, audio data, or tactile data. The following describes the video data by using an example. The video data may include several ultra-high-definition images (for example, images captured by a camera or images of field of view content), and a large data block is generated by performing compression coding (for example, high efficiency video coding (High efficiency video coding, HEVC)) on each image. A higher definition requirement for the video data indicates a larger data block obtained by coding the video data.

In some examples, the XR pro service data may be downlink data, for example, XR pro service data sent by a server to an XR device through a network device. In some examples, the XR pro service data may alternatively be uplink data, for example, XR pro service data sent by an XR device to a network device. This is not limited in this application.

### 2. Buffer status report (buffer status report, BSR)

The BSR includes a data volume of pending data (pending data). In an uplink data transmission scenario, a terminal device may report a BSR to a network device. Correspondingly, the network device may receive the BSR from the terminal device, so that the network device can properly allocate an uplink resource to the terminal device based on a data volume of pending data, that is, the uplink resource is properly scheduled. For example, for the XR pro service, in an uplink scenario of cellular transmission, the XR device may generate a BSR based on a data volume of XR pro service data, and report the BSR to the network device. In this way, the network device may properly allocate an uplink resource for an XR pro service of the terminal device based on the data volume of the XR pro service data indicated by the BSR, to properly schedule the uplink resource.

The BSR is a medium access control (medium access control, MAC) control element (control element, CE), and therefore may also be referred to as a BSR MAC CE.

Structures of some BSRs are described below by using examples.

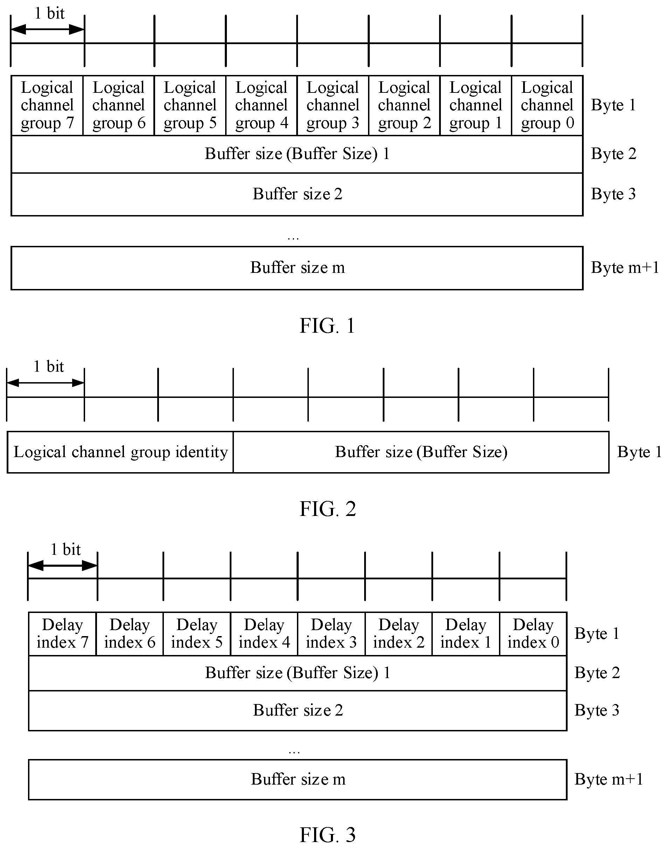

For example, a structure of a long BSR may be shown in FIG. 1. In FIG. 1, for the long BSR, transmission of data volumes of pending data on a plurality of logical channel groups (logical channel groups, LCGs) may be performed in one BSR. The long BSR may include eight bytes, and each byte corresponds to one LCG. One byte of the BSR (for example, any byte of an LCG 0 to an LCG 7) indicates whether the BSR includes a data volume of pending data on an LCG corresponding to the byte, or one byte of the BSR indicates whether a data volume of pending data on an LCG corresponding to the byte is reported in the BSR.

If a bit corresponding to an LCG i (for example, i=0) in the BSR is '1', it may indicate that the BSR includes a data volume of pending data on the LCG 0, and the BSR further includes a field, where the field indicates the data volume of the pending data on the LCG 0. In FIG. 1, if the BSR includes data volumes of pending data on k LCGs, or bits corresponding to k LCGs are set to 1, the BSR is k+1 octal characters or k+1 bytes, where k is a positive integer.

Alternatively, if a bit corresponding to an LCG i (for example, i=0) in the BSR is '0', it may indicate that the BSR does not include a data volume of pending data on the LCG 0, and the BSR does not include a field or a domain that indicates the data volume of the pending data on the LCG 0. It may be understood as that the field that indicates the data volume of the pending data on the LCG 0 does not exist in the BSR, or it may be understood as that a bit width of the field that indicates the data volume of the pending data on the LCG 0 is 0 bits.

For example, in FIG. 1, the field that indicates the data volume of the pending data on the LCG 0 may be a buffer size (buffer size) field. Generally, the buffer size field includes eight bits, and the buffer size field indicates an index (index) in a buffer status table instead of a value of a data volume. In this way, the network device may determine a data volume (BS value) from the buffer status table based on the index.

For example, it is assumed that a buffer status table corresponding to the long BSR is shown in Table 1. If a data volume of pending data on a logical channel corresponding to a buffer size needs to be determined from Table 1, a value of the buffer size needs to be converted into a decimal value ranging from 0 to 255. In this way, the data volume of the pending data on the logical channel corresponding to the buffer size may be determined from Table 1 based on the value of the buffer size (namely, a decimal index value).

**Table 1**

| Index (Index) | Data volume (BS value) | Index (Index) | Data volume (BS value) | Index (Index) | Data volume (BS value) | Index (Index) | Data volume (BS value) |
|---|---|---|---|---|---|---|---|
| 0 | 0 | 64 | ≤560 | 128 | ≤31342 | 192 | ≤1754595 |
| 1 | ≤10 | 65 | ≤597 | 129 | ≤33376 | 193 | ≤1868488 |
| 2 | ≤11 | 66 | ≤635 | 130 | ≤35543 | 194 | ≤1989774 |
| 3 | ≤12 | 67 | ≤677 | 131 | ≤37850 | 195 | ≤2118933 |
| 4 | ≤13 | 68 | ≤720 | 132 | ≤40307 | 196 | ≤2256475 |
| 5 | ≤14 | 69 | ≤767 | 133 | ≤42923 | 197 | ≤2402946 |
| 6 | ≤15 | 70 | ≤817 | 134 | ≤45709 | 198 | ≤2558924 |
| 7 | ≤16 | 71 | ≤870 | 135 | ≤48676 | 199 | ≤2725027 |
| 8 | ≤17 | 72 | ≤926 | 136 | ≤51836 | 200 | ≤2901912 |
| 9 | ≤18 | 73 | ≤987 | 137 | ≤55200 | 201 | ≤3090279 |
| 10 | ≤19 | 74 | ≤1051 | 138 | ≤58784 | 202 | ≤3290873 |
| 11 | ≤20 | 75 | ≤1119 | 139 | ≤62599 | 203 | ≤3504487 |
| 12 | ≤22 | 76 | ≤1191 | 140 | ≤66663 | 204 | ≤3731968 |
| 13 | ≤23 | 77 | ≤1269 | 141 | ≤70990 | 205 | ≤3974215 |
| 14 | ≤25 | 78 | ≤1351 | 142 | ≤75598 | 206 | ≤4232186 |
| 15 | ≤26 | 79 | ≤1439 | 143 | ≤80505 | 207 | ≤4506902 |
| 16 | ≤28 | 80 | ≤1532 | 144 | ≤85730 | 208 | ≤4799451 |
| 17 | ≤30 | 81 | ≤1631 | 145 | ≤91295 | 209 | ≤5110989 |
| 18 | ≤32 | 82 | ≤1737 | 146 | ≤97221 | 210 | ≤5442750 |
| 19 | ≤34 | 83 | ≤1850 | 147 | ≤103532 | 211 | ≤5796046 |
| 20 | ≤36 | 84 | ≤1970 | 148 | ≤110252 | 212 | ≤6172275 |
| 21 | ≤38 | 85 | ≤2098 | 149 | ≤117409 | 213 | ≤6572925 |
| 22 | ≤40 | 86 | ≤2234 | 150 | ≤125030 | 214 | ≤6999582 |
| 23 | ≤43 | 87 | ≤2379 | 151 | ≤133146 | 215 | ≤7453933 |
| 24 | ≤46 | 88 | ≤2533 | 152 | ≤141789 | 216 | ≤7937777 |
| 25 | ≤49 | 89 | ≤2698 | 153 | ≤150992 | 217 | ≤8453028 |
| 26 | ≤52 | 90 | ≤2873 | 154 | ≤160793 | 218 | ≤9001725 |
| 27 | ≤55 | 91 | ≤3059 | 155 | ≤171231 | 219 | ≤9586039 |
| 28 | ≤59 | 92 | ≤3258 | 156 | ≤182345 | 220 | ≤10208280 |
| 29 | ≤62 | 93 | ≤3469 | 157 | ≤194182 | 221 | ≤10870913 |
| 30 | ≤66 | 94 | ≤3694 | 158 | ≤206786 | 222 | ≤11576557 |
| 31 | ≤71 | 95 | ≤3934 | 159 | ≤220209 | 223 | ≤12328006 |
| 32 | ≤75 | 96 | ≤4189 | 160 | ≤234503 | 224 | ≤13128233 |
| 33 | ≤80 | 97 | ≤4461 | 161 | ≤249725 | 225 | ≤13980403 |
| 34 | ≤85 | 98 | ≤4751 | 162 | ≤265935 | 226 | ≤14887889 |
| 35 | ≤91 | 99 | ≤5059 | 163 | ≤283197 | 227 | ≤15854280 |
| 36 | ≤97 | 100 | ≤5387 | 164 | ≤301579 | 228 | ≤16883401 |
| 37 | ≤103 | 101 | ≤5737 | 165 | ≤321155 | 229 | ≤17979324 |
| 38 | ≤110 | 102 | ≤6109 | 166 | ≤342002 | 230 | ≤19146385 |
| 39 | ≤117 | 103 | ≤6506 | 167 | ≤364202 | 231 | ≤20389201 |
| 40 | ≤124 | 104 | ≤6928 | 168 | ≤387842 | 232 | ≤21712690 |
| 41 | ≤132 | 105 | ≤7378 | 169 | ≤413018 | 233 | ≤23122088 |
| 42 | ≤141 | 106 | ≤7857 | 170 | ≤439827 | 234 | ≤24622972 |
| 43 | ≤150 | 107 | ≤8367 | 171 | ≤468377 | 235 | ≤26221280 |
| 44 | ≤160 | 108 | ≤8910 | 172 | ≤498780 | 236 | ≤27923336 |
| 45 | ≤170 | 109 | ≤9488 | 173 | ≤531156 | 237 | ≤29735875 |
| 46 | ≤181 | 110 | ≤10104 | 174 | ≤565634 | 238 | ≤31666069 |
| 47 | ≤193 | 111 | ≤10760 | 175 | ≤602350 | 239 | ≤33721553 |
| 48 | ≤205 | 112 | ≤11458 | 176 | ≤641449 | 240 | ≤35910462 |
| 49 | ≤218 | 113 | ≤12202 | 177 | ≤683087 | 241 | ≤38241455 |
| 50 | ≤233 | 114 | ≤12994 | 178 | ≤727427 | 242 | ≤40723756 |
| 51 | ≤248 | 115 | ≤13838 | 179 | ≤774645 | 243 | ≤43367187 |
| 52 | ≤264 | 116 | ≤14736 | 180 | ≤824928 | 244 | ≤46182206 |
| 53 | ≤281 | 117 | ≤15692 | 181 | ≤878475 | 245 | ≤49179951 |
| 54 | ≤299 | 118 | ≤16711 | 182 | ≤935498 | 246 | ≤52372284 |
| 55 | ≤318 | 119 | ≤17795 | 183 | ≤996222 | 247 | ≤55771835 |
| 56 | ≤339 | 120 | ≤18951 | 184 | ≤1060888 | 248 | ≤59392055 |
| 57 | ≤361 | 121 | ≤20181 | 185 | ≤1129752 | 249 | ≤63247269 |
| 58 | ≤384 | 122 | ≤21491 | 186 | ≤1203085 | 250 | ≤67352729 |
| 59 | ≤409 | 123 | ≤22885 | 187 | ≤1281179 | 251 | ≤71724679 |
| 60 | ≤436 | 124 | ≤24371 | 188 | ≤1364342 | 252 | ≤76380419 |
| 61 | ≤464 | 125 | ≤25953 | 189 | ≤1452903 | 253 | ≤81338368 |
| 62 | ≤494 | 126 | ≤27638 | 190 | ≤1547213 | 254 | >81338368 |
| 63 | ≤526 | 127 | ≤29431 | 191 | ≤1647644 | 255 | Reserved |

For example, a structure of a short BSR may be shown in FIG. 2. In FIG. 2, for the short BSR, transmission of data volumes of pending data on a plurality of logical channels in one LCG may also be performed in one BSR. The short BSR may also include eight bits. The first three bits indicate an LCG identity (Identity document, ID), and the LCG ID may identify an LCG. The last five bits indicate a buffer size, and the buffer size indicates a data volume of pending data on an LCG corresponding to the LCG ID.

For a buffer size in the short BSR, the buffer size may also indicate an index. For example, it is assumed that a buffer status table corresponding to the short BSR is shown in Table 2. If a data volume of pending data on a logical channel corresponding to a buffer size needs to be determined from Table 2, a value of the buffer size also needs to be converted into a decimal value ranging from 0 to 31. In this way, the data volume of the pending data on the logical channel corresponding to the buffer size may be determined from Table 2 based on the value of the buffer size (namely, a decimal index value).

**Table 2**

| Index (Index) | Data volume (BS value) | Index (Index) | Data volume (BS value) | Index (Index) | Data volume (BS value) | Index (Index) | Data volume (BS value) |
|---|---|---|---|---|---|---|---|
| 0 | 0 | 8 | ≤102 | 16 | ≤1446 | 24 | ≤20516 |
| 1 | ≤10 | 9 | ≤142 | 17 | ≤2014 | 25 | ≤28581 |
| 2 | ≤14 | 10 | ≤198 | 18 | ≤2806 | 26 | ≤39818 |
| 3 | ≤20 | 11 | ≤276 | 19 | ≤3909 | 27 | ≤55474 |
| 4 | ≤28 | 12 | ≤384 | 20 | ≤5446 | 28 | ≤77284 |
| 5 | ≤38 | 13 | ≤535 | 21 | ≤7587 | 29 | ≤107669 |
| 6 | ≤53 | 14 | ≤745 | 22 | ≤10570 | 30 | ≤150000 |
| 7 | ≤74 | 15 | ≤1038 | 23 | ≤14726 | 31 | >150000 |

Some possible conditions for canceling triggering of the BSR are described below by using examples.

Condition 1: An uplink resource (for example, a MAC protocol data unit (protocol data unit, PDU)) can carry all pending data, but the uplink resource cannot carry a BSR that includes data volumes of all the pending data and a subheader of the BSR.

Condition 2: An uplink resource carries a BSR (for example, a long BSR, an extended long BSR, a short BSR, or an extended short BSR) of a preset type, and the BSR includes target information. The target information is a buffer status in which the BSR is last triggered before the uplink resource is assembled. The buffer status is a data volume of pending data.

If any terminal device meets Condition 1 and/or Condition 2, all triggered BSRs of the terminal device are canceled.

It should be noted that, if the terminal device triggers a BSR, and the triggered BSR is not canceled, the terminal device may further trigger an SR when a condition for triggering the SR is met.

Some possible conditions for triggering the SR are described below by using examples.

Condition 3: A logical channel SR-delay timer (logical channel SR-delay timer) configured for a logical channel corresponding to a BSR is not running, and the terminal device currently has no uplink resource available for transmission of pending data. The logical channel SR-delay timer is a timer for prohibiting triggering of an SR. In other words, when the logical channel SR-delay timer is running, even if there is a triggered BSR corresponding to the logical channel, an SR corresponding to the logical channel is not triggered.

It should be noted that the logical channel SR-delay timer may be configured for a MAC entity. The network device may configure logical channel SR-delay timer applied (logical channel SR-delay timer applied) for each logical channel. The logical channel SR-delay timer applied is used to determine whether the logical channel SR-delay timer is configured for a logical channel. In other words, for a logical channel, when the logical channel SR-delay timer applied is set to enabled (for example, true), the logical channel SR-delay timer may be started for the logical channel; or when the logical channel SR-delay timer applied is set to disabled (for example, false), the logical channel SR-delay timer may not be started for the logical channel. Therefore, that the logical channel SR-delay timer is configured for the logical channel corresponding to the BSR may be understood as that logical channel SR-delay timer applied corresponding to the logical channel is enabled.

Condition 4: A logical channel SR-delay timer configured for a logical channel corresponding to a BSR is not running, an SR-mask (logicalChannelSR-Mask) corresponding to the logical channel for triggering the BSR is set to disabled (for example, false), and a MAC entity configures uplink resource grant scheduling for the terminal device.

Condition 5: A logical channel SR-delay timer configured for a logical channel corresponding to a BSR is not running, and the terminal device currently has an uplink resource available for transmission of pending data, but the uplink resource does not meet a parameter requirement (for example, a logical channel priority (logical channel priority, LCP)) of pending data on the logical channel. The logical channel may be understood as a logical channel for triggering the BSR.

If the terminal device meets Condition 3, Condition 4, or Condition 5, the terminal device may trigger the SR.

It should be noted that Condition 3 to Condition 5 are mainly applied to a scenario in which the currently triggered BSR is a regular BSR (regular BSR).

In a possible implementation, when the terminal device reports the SR, the terminal device needs to report the SR based on SR configuration information. Generally, the SR configuration information may be obtained by using RRC signaling (for example, scheduling Request Config signaling). The SR configuration information may include an SR ID, an SR-prohibit timer (sr-ProhibitTimer), and a maximum quantity of SR transmissions (sr-TransMax).

sr-ProhibitTimer indicates that an SR corresponding to an SR configuration is not sent in a time period. sr-TransMax indicates a maximum quantity of times that the SR can be sent. When the quantity of sending times reaches sr-TransMax, a random access procedure is initialized. SR IDs are used to distinguish between SR configurations. Each SR configuration has an SR ID. The SR ID may be associated with a logical channel (logical channel, LCH) or an LCG.

It should be noted that the network device may configure or associate one SR ID for each LCH or LCG. If pending data on an LCH or an LCG triggers a regular BSR, and the condition for triggering the SR is met, the terminal device may trigger the SR, and when a quantity of times of sending the SR does not reach sr-TransMax, send the SR based on an uplink resource corresponding to an SR configuration indicated by an SR ID, and start sr-prohibitTimer in the SR configuration corresponding to the SR ID.

Some possible conditions for canceling triggering of the SR are described below by using examples.

Condition 6: An uplink resource (for example, a MAC PDU) can carry all pending data.

Condition 7: An uplink resource carries a BSR (for example, a long BSR or a short BSR) of a target type, and the BSR includes a buffer status in which the BSR is last triggered before the uplink resource is assembled. For example, the buffer status may be a data volume of pending data.

If any terminal device meets Condition 6 and/or Condition 7, all triggered SRs of the terminal device are canceled. In addition, sr-ProhibitTimer corresponding to each triggered SR is disabled.

### 3. Delay status report (delay status report, DSR)

The DSR includes a data volume and delay information of pending data. In an uplink data transmission scenario, a terminal device may report a DSR to a network device. Correspondingly, the network device may receive the DSR from the terminal device, so that the network device can properly allocate an uplink resource to the terminal device based on the data volume and delay information of the pending data, that is, the uplink resource is properly scheduled.

It should be noted that the DSR is merely an example name temporarily provided, and the report carrying the delay information of the pending data may also have another name. This is not limited in embodiments of this application.

It should be noted that, how the DSR is specifically used to report the delay information (or the delay information and the data volume) of the pending data is not specified. In a possible implementation, similar to the BSR MAC CE, the DSR may also be a MAC CE, and may be referred to as a DSR MAC CE.

Optionally, the DSR may also indicate the data volume of the pending data. It may be understood that, if the DSR may indicate both the data volume of the pending data and the delay information of the pending data, the DSR may also be understood as a BSR with a new function expanded based on an original function.

Some possible manners for triggering the DSR are described below by using examples.

Manner 1: The DSR is triggered based on storage duration of the pending data.

It may be understood as that the DSR may be triggered because the storage duration of the pending data is greater than or equal to a threshold. For example, the terminal device receives threshold information, where the threshold information indicates a threshold. When storage duration of pending data of the terminal device (for example, an XR device) is greater than or equal to the threshold, the DSR is triggered.

In this application, for uplink transmission, a start moment of the storage duration of the pending data may be understood as a moment at which the pending data arrives at the terminal device. For example, the start moment may be a moment at which the pending data arrives at an access stratum (access stratum, AS), a moment at which the pending data arrives at a service data adaptation protocol (service data adaptation protocol, SDAP) layer, a moment at which the pending data arrives at a packet data convergence protocol (packet data convergence protocol, PDCP) layer, a moment at which the pending data arrives at a radio link control (radio link control, RLC) layer, a moment at which the pending data arrives at a logical channel (logical channel, LCH), or a moment at which the pending data arrives at a medium access control (medium access control, MAC) layer. This is not limited in embodiments of this application.

It should be noted that in this application, the pending data is described as follows: The pending data may be a PDU, the pending data may be a protocol data unit set (PDU set), or the pending data may be a data burst (data burst).

The PDU set includes at least one PDU. Different PDUs in one PDU set each include an information unit generated by one application (or application layer). For example, a video frame with a large data volume usually needs to be divided into a plurality of PDUs for transmission.

One data burst may be understood as at least one PDU generated and sent by an application (or an application layer) in a short time period. Different PDUs in a same data burst may be from one or more PDU sets.

When the pending data is understood as a PDU set (or a data burst), the moment at which the pending data arrives at the terminal device may be understood as a moment at which a PDU in the PDU set (or the data burst) arrives at the terminal device, which is usually a corresponding moment at which a PDU in the PDU set (or the data burst) first arrives at the terminal device. It should be understood that the PDU that first arrives at the terminal device may be a 1^{st} PDU in the PDU set (or the data burst) in a generation or sending sequence, or may be a PDU that is not a 1^{st} PDU in the PDU set (or the data burst) in a generation or sending sequence, for example, a 2^{nd} PDU. This is not limited in embodiments of this application.

In this application, an end moment of the storage duration of the pending data may be understood as a current moment of a communication system, that is, the storage duration is updated (for example, increased) as the system runs. The storage duration may be in any time unit, for example, millisecond, or may be in a communication-related unit, for example, one or more of a quantity of slots, a quantity of subframes, and a quantity of system frames. This is not limited in embodiments of this application.

Manner 2: The DSR is triggered based on a remaining transmission delay budget of the pending data.

It may be understood as that the DSR may alternatively be triggered because the remaining transmission delay budget of the pending data is less than or equal to a threshold. For example, the terminal device receives threshold information, where the threshold information indicates a threshold. When a remaining transmission delay budget of pending data of the terminal device (for example, an XR device) reaches (is less than or equal to) the threshold, the DSR is triggered.

In this application, the remaining transmission delay budget may be understood as duration. A start moment of the remaining transmission delay budget is a current moment of a system, and an end moment of the remaining transmission delay budget is a moment at which a transmission delay budget of the pending data is about to expire or a moment at which the pending data is about to be discarded.

The transmission delay budget is described as follows:
For example, the transmission delay budget may be a packet delay budget (packet delay budget, PDB) corresponding to the pending data. The PDB may be understood as a requirement for a delay from the terminal device to a base station or to a user plane function (user plane function, UPF) network element, that is, duration from arrival of one PDU at the terminal device to successful reception of the PDU by the base station or the UPF network element. Generally, the PDB is configured by a core network (core network, CN) by using a 5G quality of service (quality of service, QoS) identifier (5G QoS identifier, 5QI).

For another example, the transmission delay budget may be a PDU set delay budget (PDU set delay budget, PSDB) timeout corresponding to the pending data. The PSDB may be understood as a transmission delay requirement of a PDU set, for example, duration from first arrival of a PDU in one PDU set at the terminal device to successful reception of all PDUs in the PDU set by a base station or a UPF network element.

The moment at which the pending data is about to be discarded is described as follows:
The moment at which the pending data is about to be discarded may be understood as a corresponding moment at which a packet discard timer corresponding to the pending data expires.

For example, a PDCP layer configures a packet discard timer for each service data unit (service data unit, SDU). When an SDU from a higher layer arrives at the PDCP layer, the packet discard timer is started for the PDCP SDU. When the packet discard timer expires, a corresponding SDU or PDU is discarded.

Manner 3: The DSR is triggered based on the data volume of the pending data.

For example, when a data volume of an LCH or an LCG exceeds (is greater than or equal to) a threshold, the DSR is triggered.

It should be understood that because one terminal device may have a plurality of LCHs and LCGs, a DSR triggered by any LCH or LCG may include delay information of another LCG or LCH, or include delay information and a related data volume.

It should be noted that the thresholds described in Manner 1 to Manner 3 may be preconfigured before delivery of the terminal device, or may be configured based on higher layer signaling (for example, an RRC message). This is not limited in this application. When the threshold is related to a delay, the threshold may be in any time unit, for example, millisecond, or may be in a time domain resource-related unit, for example, a slot, a subframe, or a system frame. This is not limited in this application. When the threshold is related to a data volume, the threshold may be measured in bits, bytes, or the like. This is not limited in this application.

Structures of some DSR are described below by using examples.

For example, a structure of a DSR may be shown in FIG. 3. In FIG. 3, a delay index (delay index) represents a time interval (for example, a remaining transmission delay budget interval). The time interval may be shown in Table 3.

**Table 3**

| Delay index (delay index) | Remaining transmission delay budget interval (remaining time interval X) |
|---|---|
| 0 | X≤5 ms |
| 1 | X≤10 ms |
| 2 | X≤15 ms |
| 3 | X≤20 ms |
| 4 | X≤25 ms |
| 5 | X≤30 ms |
| 6 | X≤35 ms |
| 7 | 35 ms>X |

In Table 3, each value of the delay index may represent whether the MAC CE includes a data volume in the time interval. When a delay index field indicates that there is a data volume in a corresponding time interval, the MAC CE has a corresponding buffer size field that is used to carry a data volume of pending data in the time interval corresponding to the delay index.

For example, when a bit corresponding to a delay index i (for example, i=0) is '1', the MAC CE includes a data volume of pending data whose remaining transmission delay budget is in an interval 'X≤5 ms'. In this case, the MAC CE includes a field, carrying specific information that indicates the data volume of the pending data whose remaining transmission delay budget is in the interval 'X≤5 ms'. When a bit corresponding to a delay index i (for example, i=0) is '0', the MAC CE does not include a data volume of pending data whose remaining transmission delay budget is in an interval 'X≤5 ms'. In this case, the MAC CE does not include a field that indicates the data volume of the pending data whose remaining transmission delay budget is in the interval 'X≤5 ms', to reduce overheads. The data volume of the pending data may be data volumes of all pending data that is on all logical channels of the terminal device and that is in the remaining transmission delay budget interval, or may be a data volume of all pending data that is on a logical channel configured to report the delay information and that is in the remaining transmission delay budget interval.

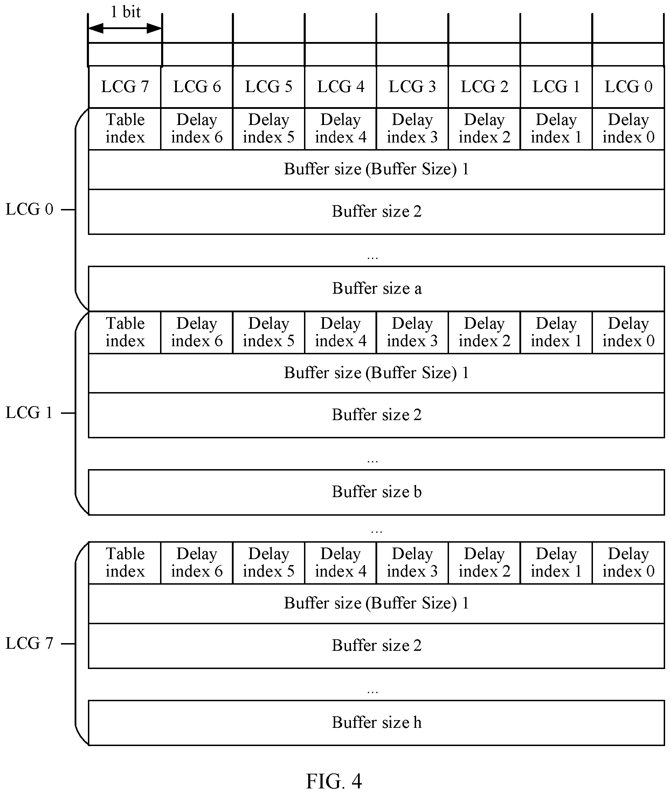

For example, a structure of another DSR may be shown in FIG. 4. In FIG. 4, transmission of data volumes of a plurality of LCGs may be performed by using one MAC CE. One byte of the MAC CE (for example, a byte of an LCG 0 to an LCG 7) indicates transmission of a data volume of which LCG is performed in the MAC CE.

For example, when a bit corresponding to an LCG i (for example, i=0) is '1', the MAC CE includes a data volume of pending data on the LCG 0. In this case, the MAC CE includes related information indicating the data volume and delay information corresponding to the LCG 0. For an indication manner, refer to FIG. 3. Specifically, each LCG in the MAC CE corresponds to several delay indexes, and each delay index indicates whether a data volume of pending data on the LCG exists in a corresponding time interval. For example, when a bit corresponding to an LCG i (for example, i=0) is '1', and a bit corresponding to a delay index i (for example, i=0) is '1', the MAC CE includes a data volume of pending data that is on the LCG 0 and whose remaining transmission delay budget is in an interval 'X≤5 ms'. In this case, the MAC CE includes a field, carrying specific information that indicates the data volume of the pending data that is on the LCG 0 and whose remaining transmission delay budget is in the interval 'X≤5 ms'. Therefore, in FIG. 4, it may be understood as that each LCG corresponds to one piece of content in FIG. 3. If the MAC CE indicates that a data volume on an LCG is to be reported, the MAC CE includes delay information and the data volume that correspond to the LCG and that are shown in FIG. 3.

In addition, when LCG i='0', it means that no data volume on the LCG i is reported in the MAC CE, and fields that indicate a data volume and delay information corresponding to the LCG i do not appear in the MAC CE, so that overheads of the MAC CE are reduced.

Optionally, as shown in FIG. 4, the DSR may further include a table index. The table index indicates a buffer status table used for a buffer size when a plurality of buffer status tables are configured for the terminal device. For example, when a plurality of buffer status tables are configured for the terminal device, for example, a plurality of buffer status tables (for example, Table 1 provided in this embodiment of this application) are configured, and buffer status indexes correspond to different data volumes, the table index is needed to indicate a buffer status table referenced by an index indicated by the buffer size.

For example, the table index may be at a granularity of a MAC CE. To be specific, for data volumes indicated in the MAC CE, that is, content indicated by a buffer size, refer to a buffer status table indicated by the table index, without distinguishing between LCGs to which data corresponding to the data volumes belongs. Alternatively, as shown in FIG. 4, the table index may be at a granularity of an LCG. Each LCG corresponds to one table index, and the table index indicates a buffer status table used for a buffer size corresponding to the LCG.

In some embodiments, for the MAC CE in FIG. 3 or FIG. 4, delay information of the MAC CE is determined based on a packet discard timer. The packet discard timer is configured by using RRC signaling. For example, when a PDCP SDU arrives at a PDCP layer, a packet discard timer is started (or restarted) for the SDU. Delay information of the SDU may be determined based on a real-time value of the packet discard timer.

In some other embodiments, for the MAC CE in FIG. 3 or FIG. 4, delay information of the MAC CE is usually determined based on a transmission delay budget. For example, for a PDCP SDU that arrives at a PDCP layer, a transmission delay budget of the SDU may be determined based on a 5QI, and delay information of the SDU may be determined based on the transmission delay budget and storage duration.

It can be learned from the foregoing related descriptions of the "BSR" that when the terminal device has pending data that needs to be sent, the terminal device may trigger a buffer status report BSR and/or an SR corresponding to the BSR. The BSR may indicate a data volume of pending data, and the SR corresponding to the BSR may be used to request a resource used for transmission of the pending data indicated by the BSR. In this way, the network device may properly schedule an uplink resource based on the BSR and/or the SR. However, after triggering the BSR and/or the SR corresponding to the BSR, the terminal device further needs to adaptively cancel the triggering of the BSR and/or the SR corresponding to the BSR, to prevent the terminal device from continuously sending the BSR and/or the SR corresponding to the BSR.

However, a delay-sensitive service has a strict requirement on a delay of air interface transmission. Because the BSR includes only the data volume of the pending data, the network device may fail to learn of delay information of delay-sensitive service data based on the BSR. As a result, the scheduled uplink resource may not cause transmission of the delay-sensitive service data to be completed within required air interface time. In view of this, the terminal device may report the DSR. In this way, the network device may obtain a data volume of the delay-sensitive service data and the delay information of the delay-sensitive service data based on the DSR, so that the network device may properly allocate an uplink resource to the terminal device based on the delay information of the delay-sensitive service data, to increase a possibility of completing transmission of the delay-sensitive service data within the required air interface time. In addition, when the DSR is triggered, the terminal device may also trigger the SR, so that the network device can learn, based on the SR, that there is pending data on a logical channel corresponding to the SR or the DSR is triggered, so that the network device can quickly schedule an uplink resource for the terminal device based on the SR.

However, if the triggered DSR or SR is not canceled, the terminal device continuously sends the DSR or the SR, causing a waste of uplink resources. In view of this, how to cancel the DSR or the SR is a problem to be urgently resolved by a person skilled in the art.

Based on this, embodiments of this application provide a communication method. Because first data corresponds to M logical channels, and the M logical channels are logical channels configured to report delay information, a terminal device has a capability of reporting delay information on the M logical channels. In this way, the terminal device can trigger first delay information of the first data. Correspondingly, the terminal device may also trigger a request for an uplink resource of the first data corresponding to the M logical channels.

The terminal device may determine, based on the first data and the uplink resource allocated for transmission of the first data, whether a first condition is met, and cancel triggered first information when the first condition is met. The first information is used to request the uplink resource used for transmission of the first data, or the first information indicates the first delay information of the first data, to avoid continuous requesting of the uplink resource used for transmission of the first data, or continuous reporting of the first delay information of the first data, so as to reduce a waste of uplink resources.

The following describes the technical solutions in embodiments of this application with reference to the accompanying drawings in embodiments of this application.

For ease of understanding of embodiments of this application, the following descriptions are provided before embodiments of this application are described.
1. In embodiments of this application, for ease of description, when numbering is involved, numbers may be consecutively numbered from 1, or may be consecutively numbered from 0, or may be numbered from any parameter. It should be understood that the foregoing descriptions are all settings for ease of describing the technical solutions provided in embodiments of this application, but are not intended to limit the scope of embodiments of this application.
2. In embodiments of this application, "indication" may include a direct indication and an indirect indication, or may include an explicit indication and an implicit indication. Information indicated by a piece of information (for example, first information in the following) is referred to as to-be-indicated information. In a specific implementation process, the to-be-indicated information is indicated in a plurality of manners. By way of example but not limitation, the to-be-indicated information may be directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, while another part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different indication information may be indicated in different manners. In a specific implementation process, a required indication manner may be selected based on a specific requirement. The selected indication manner is not limited in embodiments of this application. In this way, the indication manner in embodiments of this application needs to be understood as covering various methods that can enable a to-be-indicated party to learn of the to-be-indicated information.

It should be understood that, the to-be-indicated information may be sent as a whole, or may be divided into a plurality of pieces of sub-information for separate sending. In addition, sending periodicities and/or sending occasions of the sub-information may be the same or different. A specific sending method is not limited in embodiments of this application. The sending periodicities and/or the sending occasions of these pieces of sub-information may be predefined, for example, predefined according to a protocol, or may be configured by a transmit-end device by sending configuration information to a receive-end device. The configuration information may include, for example, but not limited to, one or a combination of at least two of radio resource control signaling, for example, RRC signaling, MAC layer signaling (for example, a MAC CE), and physical layer signaling (for example, downlink control information (downlink control information, DCI)).

3. "Predefinition" or "preconfiguration" may be implemented by pre-storing, in a device (for example, including a terminal device), corresponding code, a table, or another manner that may indicate related information. A specific implementation is not limited in embodiments of this application. "Storage" may be storage in one or more memories. The one or more memories may be separately disposed, or may be integrated into an encoder, a decoder, a processor, or a communication apparatus. Alternatively, a part of the one or more memories may be separately disposed, and a part may be integrated into a decoder, a processor, or a communication apparatus. A type of the memory may be a storage medium in any form. This is not limited in embodiments of this application.

4. A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in embodiments of this application.

5. In embodiments of this application, descriptions such as "when...", "in a case of...", "if", and "if" all mean that a device (for example, a terminal device) performs corresponding processing in an objective case, but do not constitute a limitation on time, do not require the device (for example, the terminal device) to perform a determining action during implementation, and do not mean that there is another limitation.

6. In descriptions of this application, unless otherwise specified, "/" indicates that associated objects are in an "or" relationship. For example, A/B may indicate A or B. "And/or" in embodiments of this application merely describes an association relationship between the associated objects, and indicates that three relationships may exist. For example, A and/or B may indicate the following cases: Only A exists, both A and B exist, and only B exists, where A and B may be singular or plural. In addition, in the descriptions of embodiments of this application, unless otherwise specified, "a plurality of" means two or more. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

Embodiments of this application are applicable to an LTE system, an NR system (also referred to as a 5G system), a vehicle to everything (vehicle to everything, V2X) system, an LTE-NR hybrid networking system, a device-to-device (device-to-device, D2D) system, a machine-to-machine (machine-to-machine, M2M) communication system, an internet of things (internet of thing, IoT) system (for example, a narrowband internet of things (narrowband internet of thing, NB-IoT) system), and another next-generation communication system. Alternatively, the communication system may be a non-3GPP communication system. This is not limited.

In addition, a communication architecture and a service scenario described in embodiments of this application are intended to describe the technical solutions in embodiments of this application more clearly, and do not constitute a limitation on the technical solutions provided in embodiments of this application. A person of ordinary skill in the art may learn that, with the evolution of the communication architecture and the emergence of new service scenarios, the technical solutions provided in embodiments of this application are also applicable to similar technical problems.

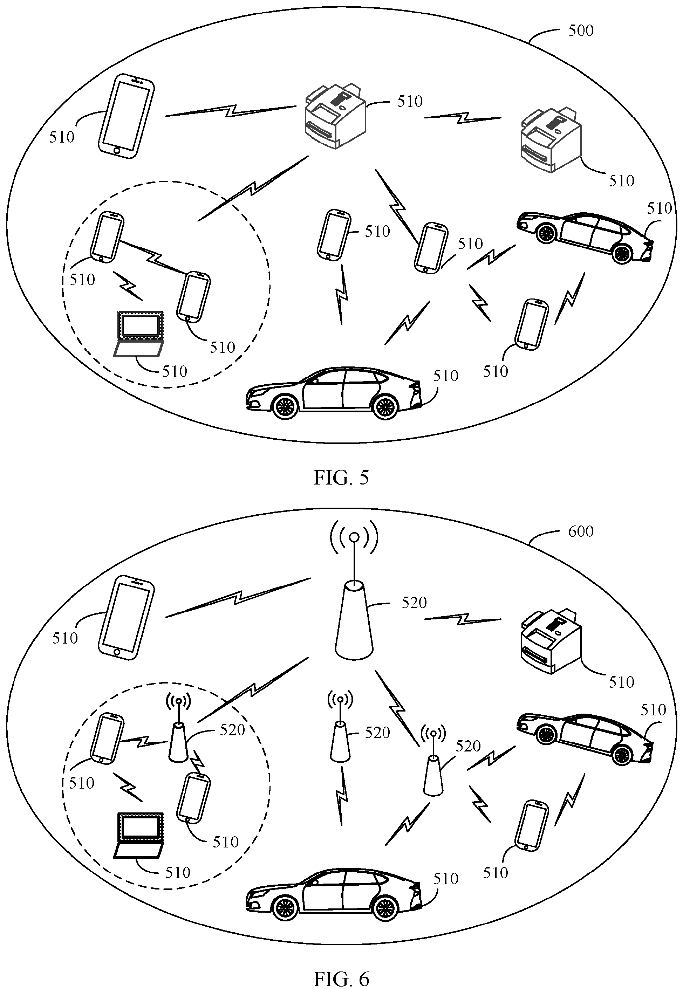

FIG. 5 is an example of a diagram of a structure of a communication system according to an embodiment of this application. FIG. 5 is described by using an example in which the communication system 500 includes one or more terminal devices 510. It should be understood that a quantity of terminal devices 510 in FIG. 5 is merely an example, and there may be more or fewer terminal devices.

In a possible implementation, the terminal device triggers first information, and cancels the triggering of the first information when a first condition is met. The first information is used to request an uplink resource used for transmission of first data, or the first information indicates first delay information of first data. The first data corresponds to M logical channels. The M logical channels are logical channels configured to report delay information. M is a positive integer. The first condition is related to a first uplink resource and the first data. The first uplink resource is allocated for transmission of the first data. For specific implementation and related technical effects of this solution, refer to the following method embodiments. Details are not described herein again.

In a possible implementation, the terminal device in embodiments of this application may be a device configured to implement a wireless communication function, for example, a terminal or a chip that may be used in the terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a compute device having a wireless communication function, another processing device, vehicle-mounted device, or wearable device connected to a wireless modem, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. In a possible implementation, the terminal device may be mobile or fixed.

In a possible implementation, a network device in embodiments of this application may be a device communicating with the terminal device. For example, the network device may include an evolved NodeB (NodeB, eNB, or e-NodeB, evolved NodeB) in a long term evolution (long term evolution, LTE) system or an LTE-advanced (LTE-advanced, LTE-A) system, for example, a conventional macro base station eNB and a micro base station eNB in a heterogeneous network scenario. Alternatively, the network device may include a next generation NodeB (next generation NodeB, gNB) in a new radio (new radio, NR) system. Alternatively, the network device may include a transmission reception point (transmission reception point, TRP), a home base station (for example, a home evolved NodeB or a home NodeB, HNB), a baseband unit (baseband unit, BBU), a baseband pool (BBU pool), a wireless fidelity (wireless fidelity, Wi-Fi) access point (access point, AP), or the like. Alternatively, the network device may include a base station in a non-terrestrial network (non-terrestrial network, NTN), that is, may be deployed on an airplane platform or a satellite. In the NTN, a network device or an access device may be used as a layer 1 (L1) relay (relay), may be used as a base station, or may be used as an integrated access and backhaul (integrated access and backhaul, IAB) node. Alternatively, the network device may be a device that implements a function of a base station in IoT, for example, a device that implements the function of the base station in uncrewed aerial vehicle communication, V2X, D2D, or machine-to-machine (machine-to-machine, M2M).

It should be understood that the terminal device 510 in this embodiment of this application may further communicate with a network device, to send information such as first information or SR configuration information to the network device. Based on this, FIG. 6 shows a diagram of another communication system. In FIG. 6, descriptions are provided by using an example in which the communication system 600 includes at least one network device 520 and one or more terminal devices 510 connected to the network device 520. It should be understood that a quantity of network devices 520 and a quantity of terminal devices 510 in FIG. 6 are merely an example, and there may be more or fewer network device 520 and more or fewer terminal devices 510.

In some possible scenarios, the network device in embodiments of this application may alternatively be a module or unit that can implement some functions of a base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have also different names, but a person skilled in the art may understand their meanings. For example, the network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by a software module, a hardware module, or a combination of a software module and a hardware module.

Optionally, the base station in embodiments of this application may include various forms of base stations, for example, a macro base station, a micro base station (or referred to as a small cell), a relay station, an access point, a home base station, a TRP, a transmitting point (transmitting point, TP), and a mobile switching center. This is not specifically limited in embodiments of this application.

In a possible implementation, in embodiments of this application, a plurality of antennas may be configured for both the network device and the terminal device, to support a massive multiple-input multiple-output (massive multiple-input multiple-output, Massive-MIMO) technology. Further, the network device and the terminal device may support both a single-user MIMO (single-user MIMO, SU-MIMO) technology and a multi-user MIMO (multi-user MIMO, MU-MIMO) technology. The MU-MIMO technology may be implemented based on a space division multiple access (space division multiple access, SDMA) technology. Because a plurality of antennas are configured, the network device and the terminal device may further flexibly support a single-input single-output (Single-Input Single-Output, SISO) technology, a single-input multiple-output (Single-Input multiple-Output, SIMO) technology, and a multiple-input single-output (multiple-input single-output, MISO) technology, to implement various diversity (for example, but not limited to, transmit diversity and receive diversity) and multiplexing technologies. The diversity technology may include but is not limited to a transmit diversity (transmit diversity, TD) technology and a receive diversity (receive diversity, RD) technology, and the multiplexing technology may be a spatial multiplexing (spatial multiplexing) technology.

In a possible implementation, the network device and the terminal device in embodiments of this application may also be referred to as communication apparatuses, and each may be a general-purpose device or a dedicated device. This is not specifically limited in embodiments of this application.

In a possible implementation, a related function of the terminal device or the network device in embodiments of this application may be implemented by one device, may be jointly implemented by a plurality of devices, or may be implemented by one or more functional modules in one device. This is not specifically limited in embodiments of this application. It may be understood that the foregoing function may be a network element in a hardware device, a software function running on dedicated hardware, a combination of hardware and software, or a virtualization function instantiated on a platform (for example, a cloud platform).

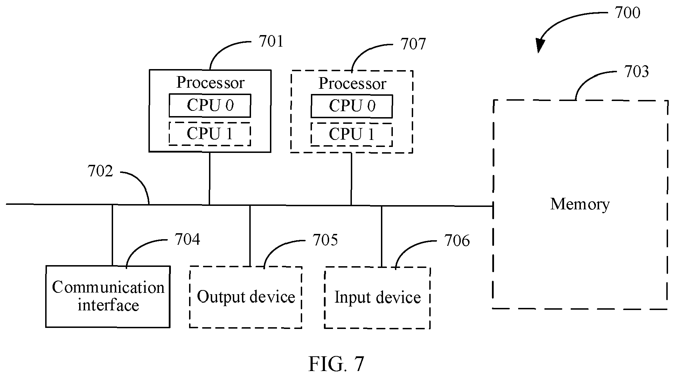

For example, the related function of the terminal device in embodiments of this application may be implemented by a communication apparatus 700 in FIG. 7. FIG. 7 is a diagram of a structure of a communication apparatus 700 according to an embodiment of this application. The communication apparatus 700 includes one or more processors 701, a communication line 702, and at least one communication interface (only an example in which the communication apparatus 700 includes a communication interface 704 and one processor 701 is used in FIG. 7 for description). Optionally, the communication apparatus 700 may further include a memory 703.

The processor 701 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 702 may include a channel for connecting different components.

The communication interface 704 may be a transceiver module configured to communicate with another device or a communication network, for example, the Ethernet, a RAN, a wireless local area network (wireless local area network, WLAN), or the like. For example, the transceiver module may be an apparatus like a transceiver or a transceiver machine. In a possible implementation, the communication interface 704 may alternatively be a transceiver circuit in the processor 701, and is configured to implement signal input and signal output of the processor.

The memory 703 may be an apparatus with a storage function. The memory 703 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that is accessible by a computer, but is not limited thereto. The memory may independently exist and is connected to the processor via the communication line 702. The memory may alternatively be integrated with the processor.

The memory 703 is configured to store computer-executable instructions for executing the solutions of this application, and the processor 701 controls the execution. The processor 701 is configured to execute the computer-executable instructions stored in the memory 703, to implement the communication method provided in embodiments of this application.

Alternatively, in this embodiment of this application, the processor 701 may perform a processing-related function in the communication method provided in the following embodiments of this application, and the communication interface 704 is responsible for communicating with another device or a communication network. This is not specifically limited in embodiments of this application.

In a possible implementation, the memory 703 in this embodiment of this application may be further configured to store information or a parameter described in the following embodiments, for example, system information.

The computer-executable instructions in this embodiment of this application may also be referred to as application program code. This is not specifically limited in embodiments of this application.

In a specific implementation, in an embodiment, the processor 701 may include one or more CPUs, for example, a CPU 0 and a CPU 1 in FIG. 7.

In a specific implementation, in an embodiment, the communication apparatus 700 may include a plurality of processors, for example, the processor 701 and a processor 707 shown in FIG. 7. Each of the processors may be a single-core processor (single-CPU), or may be a multicore processor (multi-CPU). The processor herein may be one or more devices, circuits, and/or processing cores configured to process data (for example, computer program instructions).

In a specific implementation, in an embodiment, the communication apparatus 700 may further include an output device 705 and an input device 706. The output device 705 communicates with the processor 701, and may display information in a plurality of manners.

The communication apparatus 700 may be a general-purpose apparatus or a dedicated apparatus. For example, the communication apparatus 700 may be a desktop computer, a portable computer, a network server, a palmtop computer (personal digital assistant, PDA), a mobile phone, a tablet computer, a wireless terminal device, an embedded device, or a device having a structure similar to that in FIG. 7. A type of the communication apparatus 700 is not limited in embodiments of this application.

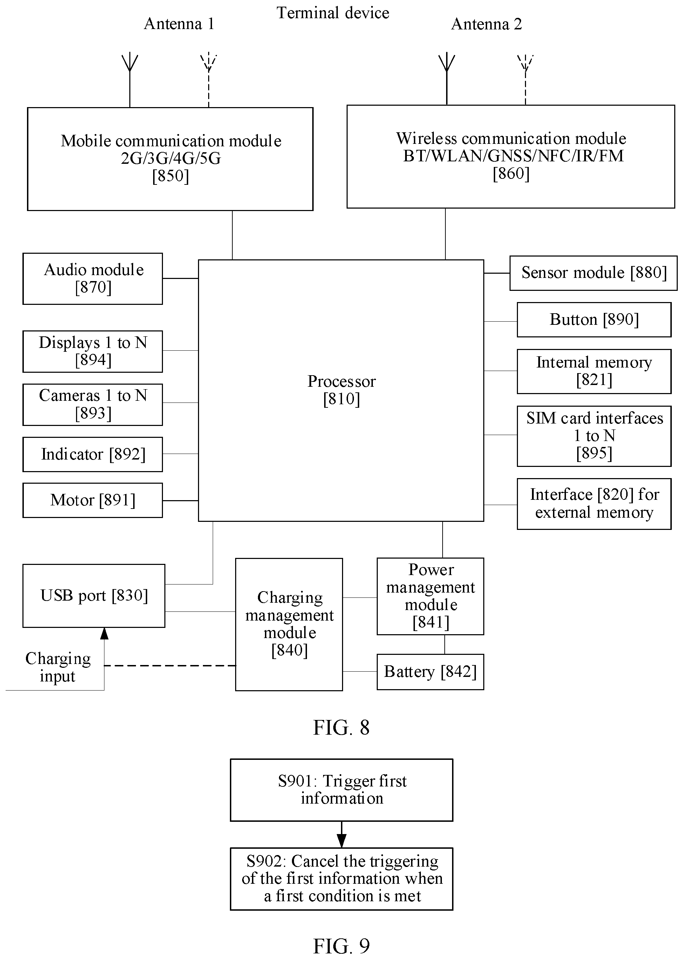

With reference to the diagram of the structure of the communication apparatus 700 shown in FIG. 7, an example in which the communication apparatus 700 is the terminal device 510 in FIG. 5 is used. For example, FIG. 8 shows a specific structural form of the terminal device according to an embodiment of this application.

In some embodiments, a function of the processor 701 in FIG. 7 may be implemented by a processor 810 in FIG. 8.

In some embodiments, a function of the communication interface 704 in FIG. 7 may be implemented by an antenna 1, an antenna 2, a mobile communication module 850, a wireless communication module 860, and the like in FIG. 8.

The antenna 1 and the antenna 2 are configured to transmit and receive electromagnetic wave signals. Each antenna in the terminal device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 850 may provide a wireless communication solution that is applied to a terminal device and that includes a 2nd generation mobile communication technology (2nd generation mobile communication technology, 2G), a 3rd generation mobile communication technology (3rd generation mobile communication technology, 3G), a 4th generation mobile communication technology (4th generation mobile communication technology, 4G), 5G, and the like. The mobile communication module 850 may include at least one filter, a switch, a power amplifier, a low noise amplifier (low noise amplifier, LNA), and the like. The mobile communication module 850 may receive an electromagnetic wave via the antenna 1, perform processing like filtering or amplification on the received electromagnetic wave, and transmit the electromagnetic wave to the modem processor for demodulation. The mobile communication module 850 may further amplify a signal modulated by the modem processor, and convert the signal into an electromagnetic wave for radiation via the antenna 1. In some embodiments, at least some functional modules in the mobile communication module 850 may be disposed in the processor 810. In some embodiments, at least some functional modules in the mobile communication module 850 may be disposed in a same device as at least some modules in the processor 810.

The wireless communication module 860 may be one or more devices integrating at least one communications processor module. The wireless communication module 860 receives an electromagnetic wave via the antenna 2, performs frequency modulation and filtering processing on an electromagnetic wave signal, and transmits a processed signal to the processor 810. The wireless communication module 860 may further receive a to-be-sent signal from the processor 810, perform frequency modulation and amplification on the signal, and convert the signal into an electromagnetic wave via the antenna 2 for radiation.

In some embodiments, the antenna 1 of the terminal device is coupled to the mobile communication module 850, and the antenna 2 is coupled to the wireless communication module 860, so that the terminal device can communicate with a network and another device by using a wireless communication technology.

In some embodiments, a function of the memory 703 in FIG. 7 may be implemented by an internal memory 821, an external memory (for example, a Micro SD card) connected through an interface 820 for external memory in FIG. 8, or the like.

In some embodiments, a function of the output device 705 in FIG. 7 may be implemented by a display 894 in FIG. 8. The display 894 includes a display panel.

In some embodiments, a function of the input device 706 in FIG. 7 may be implemented by a mouse, a keyboard, a touchscreen device, or a sensor module 880 in FIG. 8. In some embodiments, as shown in FIG. 8, the terminal device may further include one or more of an audio module 870, a camera 893, an indicator 892, a motor 891, a button 890, a SIM card interface 895, a USB port 830, a charging management module 840, a power management module 841, and a battery 842. This is not specifically limited in embodiments of this application.

It may be understood that the structure shown in FIG. 8 does not constitute a specific limitation on the terminal device. For example, in some other embodiments of this application, the terminal device may include more or fewer components than those shown in the figure, some components may be combined, some components may be split, or the components may be differently arranged. The components shown in the figure may be implemented by hardware, software, or a combination of software and hardware.

With reference to FIG. 9, the communication method provided in embodiments of this application is described in detail below.

It should be noted that in the following embodiments of this application, a name of a message between network elements, a name of each parameter, a name of each piece of information, or the like is merely an example, and may be another name in another embodiment. This is not specifically limited in the method provided in embodiments of this application.

It may be understood that in embodiments of this application, each network element may perform some or all of the steps in embodiments of this application, and these steps or operations are merely examples. In embodiments of this application, another operation or various operation variants may further be performed. In addition, the steps may be performed in a sequence different from a sequence presented in embodiments of this application, and not all the operations in embodiments of this application may be performed.

FIG. 9 shows an example of a communication method according to an embodiment of this application. The method is described by using an example in which the method is performed by a terminal device. Certainly, an action of the terminal device in the method may alternatively be performed by an apparatus/a module in the terminal device, for example, at least one of a chip, a circuit, a processor, a module, or a unit in the terminal device. This is not specifically limited in this embodiment of this application. For example, as shown in FIG. 9, the communication method includes the following steps.

S901: Trigger first information.

The first information is used to request an uplink resource used for transmission of first data, or the first information indicates first delay information of first data. The first data corresponds to M logical channels. The M logical channels are logical channels configured to report delay information. M is a positive integer.

In some embodiments, when the first information is used to request the uplink resource used for transmission of the first data, the first information may include an SR. When the first information indicates the first delay information of the first data, the first information may include a DSR. The DSR described in this embodiment of this application may include delay information of pending data on the M logical channels. Certainly, the foregoing is merely example descriptions of the first information, and the first information may further include other information. This is not limited in this application.

Optionally, the DSR described in this embodiment of this application may include the delay information of the pending data on the M logical channels.

It may be understood that, when the first information includes the DSR, and the DSR includes the delay information of the pending data on the M logical channels, if the terminal device cancels the triggering of the first information, the terminal device may also cancel the delay information of the pending data on the M logical channels, so that signaling overheads caused by a plurality of cancellation operations are reduced.

Further, the DSR described in this embodiment of this application may include only the delay information of the pending data on the M logical channels, and the DSR does not include delay information of pending data on a logical channel other than the M logical channels. In this way, another logical channel is not affected.

For example, it is assumed that the terminal device has N logical channels, where N is a positive integer greater than M. The DSR described in this application may include delay information of data on the M logical channels that are in the N logical channels and that are configured to report delay information, but does not include delay information on a logical channel other than the M logical channels in the N logical channels.

In some possible implementations, the M logical channels are all logical channels configured to report the delay information, or the M logical channels are a part of logical channels configured to report the delay information. This is not limited in this application.

It may be understood that, because the first data corresponds to the M logical channels, and the first information corresponds to the first data, it may indicate that the first information corresponds to the M logical channels. If the M logical channels are all logical channels configured to report the delay information, the first information may completely correspond to the M logical channels. In this case, if the terminal device cancels the triggering of the first information, first information corresponding to all the logical channels configured to report the delay information may be completely canceled, to reduce a possibility of wasting uplink resources.

If the M logical channels are a part of logical channels configured to report the delay information, the terminal device may flexibly select the part of logical channels configured to report the delay information, and cancel first information corresponding to the part of logical channels configured to report the delay information, to improve flexibility of canceling the triggering of the first information.

In an example, delay information of data (for example, the first delay information of the first data) described in this application may include at least one of the following: a remaining transmission delay budget or storage duration. Certainly, the foregoing is merely example descriptions of the delay information of the data, and the delay information of the data may further include other delay information. This is not limited in this application.

S902: Cancel the triggering of the first information when a first condition is met.

The first condition is related to a first uplink resource and the first data. The first uplink resource is allocated for transmission of the first data.

It can be learned from the foregoing related descriptions of the "first information" that the first information may include a DSR. However, a quantity of DSRs included in the first information is not limited in embodiments of this application. In other words, in a possible implementation, the first information may include a first DSR and a second DSR.

The first DSR is a DSR triggered when first pending data meets a first configuration condition. The second DSR is a DSR triggered when second pending data meets a second configuration condition. The first pending data is pending data on a first logical channel. The second pending data is pending data on a second logical channel. Both the first logical channel and the second logical channel are in the M logical channels.

In this case, S902 may be replaced with the following: Cancel the first DSR and the second DSR when the first condition is met.

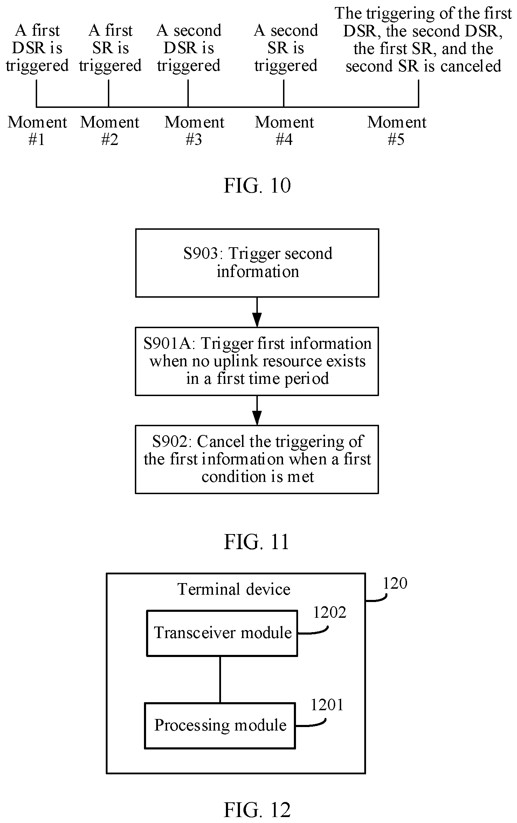

For example, as shown in FIG. 10, it is assumed that the first DSR is triggered at a moment #1, and the second DSR is triggered at a moment #3. If the first condition is met at a moment #5, the terminal device may cancel the triggering of the first DSR and the second DSR at the moment #5.

Certainly, the foregoing is merely example descriptions of the quantity of DSRs included in the first information. The first information may include the first DSR, the second DSR, a third DSR, and a fourth DSR. This is not limited in this application. It should be understood that, when the first information may include the first DSR, the second DSR, the third DSR, and the fourth DSR, S902 may be further replaced with the following: Cancel the first DSR, the second DSR, the third DSR, and the fourth DSR when the first condition is met. In other words, the terminal device may cancel all the triggered DSRs when the first condition is met.

It may be understood that, in a scenario in which the terminal device triggers a plurality of DSRs, if the first condition is met, the terminal device may cancel the triggering of the plurality of DSRs. In this way, efficiency of canceling the triggering of the DSRs can be improved.

Optionally, both the first configuration condition and the second configuration condition may be configured by a network device for the terminal device. Both the first configuration condition and the second configuration condition may be related to delay information of pending data. For example, both the first configuration condition and the second configuration condition are related to a remaining transmission delay budget of the pending data. Specifically, for example, the first configuration condition may include that a remaining transmission delay budget of the first pending data is less than or equal to a third threshold, and the second configuration condition may include that a remaining transmission delay budget of the second pending data is less than or equal to a fourth threshold.

It should be understood that the third threshold and the fourth threshold may be the same or different. This is not limited in this application.

It can be learned from the foregoing related descriptions of the "first information" that the first information may include an SR. However, a quantity of SRs included in the first information is not limited in embodiments of this application. In other words, in a possible implementation, the first information may include a first SR and a second SR.

The first SR is an SR triggered when the first pending data meets a third configuration condition. The second SR is an SR triggered when the second pending data meets a fourth configuration condition.

In this case, S902 may be further replaced with the following: Cancel the first SR and the second SR when the first condition is met.

For example, as shown in FIG. 10, it is assumed that the first SR is triggered at a moment #2, and the second SR is triggered at a moment #4. If the first condition is met at the moment #5, the terminal device may cancel the triggering of the first SR and the second SR at the moment #5.

Certainly, the foregoing is merely example descriptions of the quantity of SRs included in the first information. The first information may include the first SR, the second SR, a third SR, and a fourth SR. This is not limited in this application. It should be understood that, when the first information may include the first SR, the second SR, the third SR, and the fourth SR, S902 may be further replaced with the following: Cancel the first SR, the second SR, the third SR, and the fourth SR when the first condition is met. In other words, the terminal device may cancel all the triggered SRs when the first condition is met.

It may be understood that, in a scenario in which the terminal device triggers a plurality of SRs, if the first condition is met, the terminal device may cancel the triggering of the plurality of SRs. In this way, efficiency of canceling the triggering of the SRs can be improved.

Further, optionally, when the first logical channel is the same as the second logical channel, an arrival moment of the first pending data is earlier than an arrival moment of the second pending data.

It may be understood that the first pending data and the second pending data may be data on a same logical channel at different moments.

Optionally, both the third configuration condition and the fourth configuration condition may be configured by the network device for the terminal device. Both the third configuration condition and the fourth configuration condition may be related to whether an uplink resource exists. For example, the third configuration condition may include whether an uplink resource used for transmission of the first pending data exists in a second time period, and the fourth configuration condition may include whether an uplink resource used for transmission of the second pending data exists in a third time period.

It should be understood that duration of the second time period and duration of the third time period may be the same or different. This is not limited in this application.

In this embodiment of this application, the first uplink resource allocated for transmission of the first data may be understood as an uplink resource that is allocated by the network device to the terminal device and that is used for transmission of the first data, or may be understood as an uplink resource that is used for transmission of the first data and that is requested in the first information.

In some embodiments, the first condition includes at least one of the following:
the first uplink resource bears transmission of the first data, and the first data includes all pending data on the M logical channels; or
the first uplink resource bears transmission of the first data, and the first data includes pending data that is on the M logical channels and whose remaining transmission delay budget is less than a threshold, where a start moment of the remaining transmission delay budget is a moment at which the first information is sent, and an end moment of the remaining transmission delay budget is a moment at which transmission of the pending data is expected to be completed, or an end moment of the remaining transmission delay budget is a moment at which the pending data is discarded.

It can be learned from the foregoing related descriptions of the "pending data" that the pending data may be a PDU, or the pending data may be a PDU set. Optionally, when the pending data is a PDU set, if a remaining transmission delay budget of at least one PDU in the PDU set is less than the threshold, the PDU set may be pending data in the first data.

For example, it is assumed that the PUD set includes a PDU 1 to a PDU 5, where a remaining transmission delay budget of the PDU 1 is 20 ms, a remaining transmission delay budget of the PDU 2 is 8 ms, a remaining transmission delay budget of the PDU 3 is 9 ms, a remaining transmission delay budget of the PDU 4 is 21 ms, and a remaining transmission delay budget of the PDU 5 is 22 ms. If the threshold is 10 ms, both the remaining transmission delay budget of the PDU 2 and the remaining transmission delay budget of the PDU 3 are less than the threshold. In other words, there is a PDU whose remaining transmission delay budget is less than the threshold in the PUD set. In this case, the PUD set may be pending data in the first data.

It may be understood that, if the first uplink resource may carry all the pending data on the M logical channels, or the first uplink resource may carry a part of pending data selected from the M logical channels based on a remaining transmission delay budget, it may indicate that the first uplink resource configured by the network device for the terminal device is proper. Because the first information reported by the terminal device is mainly used by the network device to properly allocate the first uplink resource to the terminal device, the terminal device does not need to report the first information to the network device in this case. In this way, the triggering of the first information can be canceled without affecting proper configuration of the first uplink resource, so that continuous reporting of the first information can be avoided, thereby reducing a waste of uplink resources.

In this embodiment of this application, that the first uplink resource bears transmission of the first data may be understood as that the first uplink resource can accommodate all data of the first data, that is, a volume of data that can be accommodated by the first uplink resource is greater than or equal to a data volume of the first data.

In this embodiment of this application, that the first data includes all the pending data on the M logical channels may be understood as that the first data is all the pending data on the M logical channels.

In this embodiment of this application, that the first data includes the pending data that is on the M logical channels and whose remaining transmission delay budget is less than the threshold may be understood as that the first data is the pending data that is on the M logical channels and whose remaining transmission delay budget is less than the threshold. In this case, the first data may be a general term of pending data whose remaining transmission delay budget is less than the threshold and that is on each of the M logical channels. In other words, the first data includes the pending data whose remaining transmission delay budget is less than the threshold and that is on each of the M logical channels.

In this embodiment of this application, the pending data may include pending data that can be transmitted. For example, the pending data may be data that can be obtained by a MAC entity. For another example, the pending data may be data stored on a logical channel, and in this case, the pending data includes data stored on the M logical channels. Alternatively, the pending data may include data that arrives at a higher layer but is not transmitted to a corresponding logical channel, for example, data of an RLC entity, a PDCP entity, and/or an SDAP corresponding to a logical channel. In this case, the pending data includes data stored in a higher layer entity corresponding to each of the M logical channels.

It should be understood that the first condition described in this embodiment may be applied to a case in which the first information is used to request the uplink resource used for transmission of the first data, or may be applied to a case in which the first information indicates the first delay information of the first data.

Optionally, in addition to the first condition described in the foregoing embodiment, when the first information indicates the first delay information of the first data, the first condition may include that the first uplink resource bears transmission of the first data, and the first uplink resource does not bear transmission of the first information and a first subheader. The first subheader corresponds to the first information.

It may be understood that, for the first information that indicates the first delay information of the first data, when the first condition is determined, both a relationship between the first uplink resource and the first data and a relationship between the first uplink resource and the first information and the first subheader are considered, so that accuracy of canceling the triggering of the first information is further improved.

Optionally, when the first information may be further used to request the uplink resource used for transmission of the first data, the first information may be further used to request an uplink resource used for transmission of the first data and second information, or the first information may be further used to request an uplink resource used for transmission of second information, in addition to the first condition described in the foregoing embodiment, the first condition may include that the first uplink resource bears transmission of the first data, and the first uplink resource does not bear transmission of the second information and a second subheader. The second subheader corresponds to the second information. The second information indicates the first delay information of the first data.

It may be understood that, when the terminal device determines the first condition, both a relationship between the first uplink resource and the first data and a relationship between the first uplink resource and the second information and the second subheader are considered, so that accuracy of canceling the triggering of the first information is further improved.

Optionally, the first condition described in this embodiment of this application may include one or more of a condition obtained by adaptively transforming the "condition for canceling the BSR" described above and a condition obtained by adaptively transforming the "condition for canceling the SR" described above.

For example, the first condition includes that the first uplink resource does not bear transmission of the first information and the first subheader.

For another example, the first condition includes that the first uplink resource carries first information of a preset type.

For another example, the first condition includes that the first information includes preset information. The preset information is a buffer status in which the first information is last triggered before the first uplink resource is assembled. The buffer status is a data volume of pending data.

For another example, the first condition includes that the first uplink resource carries first information of a preset type, and the first information includes preset information.

For another example, the first condition includes that a prohibit timer configured for a logical channel corresponding to the first information is not running.

For another example, the first condition includes that the terminal device currently has no uplink resource available for transmission of pending data.

For another example, the first condition includes that prohibit timers configured for the M logical channels are not running, and the terminal device currently has no uplink resource available for transmission of the first data.

For another example, the first condition includes that logicalChannelSR-Mask corresponding to each of the M logical channels is set to disabled (false).

For another example, the first condition includes that the MAC entity configures uplink resource grant scheduling for the terminal device.

For another example, the first condition includes that prohibit timers configured for the M logical channels are not running, logicalChannelSR-Mask corresponding to each of the M logical channels is set to disabled, and the MAC entity configures uplink resource grant scheduling for the terminal device.

For another example, the first condition includes that the terminal device currently has the first uplink resource available for transmission of the first data, but the first uplink resource does not meet a parameter requirement of the first data.

For another example, the first condition includes that a prohibit timer configured for a logical channel corresponding to a BSR is not running, and the terminal device currently has an uplink resource available for transmission of the first data, but the uplink resource available for transmission of the first data does not meet a parameter requirement of pending data on the logical channel.

Certainly, the foregoing is merely example descriptions of the first condition, and the first condition may further include another condition. This is not limited in this application.

In a possible implementation, the threshold may be a threshold (denoted as a first threshold) of a remaining transmission delay budget of pending data that is used to trigger a DSR, or may be a threshold (denoted as a second threshold) of a remaining transmission delay budget of pending data included in a DSR. The first threshold may be the same as the second threshold, or the first threshold may be different from the second threshold. Certainly, the foregoing is merely example descriptions of the threshold, and the threshold may alternatively be of another value. This is not limited in this application.

In this embodiment of this application, the second threshold may be the same as the first threshold. It may be understood as that the second threshold is equal to the first threshold, or it may be understood as that the second threshold and the first threshold are a same threshold.

In some possible implementations, the threshold may be semi-persistently configured (for example, configured by using an RRC message), dynamically indicated (for example, indicated by using a MAC CE or DCI), or preconfigured. This is not limited in this application. Alternatively, the threshold may be configured based on a logical channel or a logical channel group, that is, a threshold of each logical channel/logical channel group may vary.

In an example, when the first uplink resource bears transmission of the first data, and the first data includes all the pending data on the M logical channels, it is assumed that the M logical channels include a logical channel 1, a logical channel 2, and a logical channel 3, where the logical channel 1 includes data 1, the logical channel 2 includes data 2, and the logical channel 3 includes data 3.

It is assumed that when a remaining transmission delay budget of the data 1 is less than or equal to the first threshold, the terminal device may trigger the DSR. When the first uplink resource can accommodate the data 1, the data 2, and the data 3, the triggering of the first information is canceled. The first information indicates the first delay information of the first data. In this case, although only the remaining transmission delay budget of the data 1 is less than the first threshold at a first moment, the data 1 to the data 3 are all reported in the first information, and therefore the triggering of the first information is canceled.

In another example, when the first uplink resource bears transmission of the first data, and the first data includes the pending data that is on the M logical channels and whose remaining transmission delay budget is less than the threshold (or the second threshold), it is assumed that the M logical channels include a logical channel 1, a logical channel 2, and a logical channel 3, where the logical channel 1 includes data 1, the logical channel 2 includes data 2, and the logical channel 3 includes data 3.

It is assumed that when a remaining transmission delay budget of the data 1 is less than or equal to the first threshold, the terminal device may trigger the first information. At a first moment, when only the remaining transmission delay budget of the data 1 is less than the second threshold, if the first uplink resource can accommodate the data 1, regardless of whether the first uplink resource can accommodate the data 2 and the data 3, the triggered first information is canceled. The first information indicates the first delay information of the first data. In this case, because only the remaining transmission delay budget of the data 1 is less than the second threshold at the first moment, when the first uplink resource can accommodate the data 1, the terminal device may cancel the triggering of the first information.

Optionally, the first moment may be a moment of determining whether to cancel the first information, for example, may be a moment at which the first uplink resource is received or a moment at which packet assembly is performed (for example, a MAC PDU is assembled). This is not limited in this application. The moment at which packet assembly is performed may be any moment between reception of indication information indicating an uplink resource and sending of the uplink resource.

In this embodiment described in this application, the terminal device may trigger the first information, and cancels the triggering of the first information when the first condition is met. The first information may be used to request the uplink resource used for transmission of the first data, or the first information may indicate the first delay information of the first data, to avoid continuous sending of the first information used to request the uplink resource used for transmission of the first data, or continuous sending of the first information indicating the first delay information of the first data, so as to reduce a waste of uplink resources.

In a DSR scenario, the first information may alternatively be used to request a resource used for transmission of the DSR, that is, used to trigger an SR for the triggered DSR. This application includes a first information triggering method. The first information is used to request a transmission resource of the first data and/or a transmission resource of the second information, and the second information indicates the first delay information of the first data. As shown in FIG. 11, if the first information is used to request the uplink resource used for transmission of the first data, before the first information is triggered, the communication method provided in this embodiment of this application further includes the following steps.

S903: Trigger the second information.

The second information indicates the first delay information of the first data.

For example, the second information may include a DSR. Certainly, the foregoing is merely example descriptions of the second information, and the second information may further include other information. This is not limited in this application.

In other words, as shown in FIG. 11, step S901 may be replaced with the following:
S901A: Trigger the first information when no uplink resource exists in a first time period.

The first time period is determined based on a moment at which the second information is triggered and preset duration.

In a possible implementation, an implementation process in which the terminal device determines the first time period may be as follows: The network device sends duration indication information to the terminal device, and correspondingly, the terminal device receives the duration indication information from the network device, where the duration indication information indicates the preset duration. The terminal device may determine the moment at which the second information is triggered as a start moment of the first time period, and determine the first time period based on the determined start moment of the first time period and the preset duration.

Further, the terminal device may trigger the first information at different moments. For example, the terminal device triggers the first information at an end moment of the first time period. For another example, the terminal device triggers the first information at the start moment of the first time period. However, if the terminal device triggers the first information at different moments, specific content included in a case that no uplink resource exists in the first time period also varies. The specific content included in the case that no uplink resource used for transmission of the first data exists in the first time period is described below by using an example.

In a possible implementation (denoted as Implementation 1), that no uplink resource used for transmission of the first data exists in the first time period includes any one of the following:
no dynamic resource indication information is received in the first time period;
dynamic resource indication information is received in the first time period or before the start moment of the first time period, and a resource use time period indicated by the dynamic resource indication information is not in the first time period; or
no semi-persistent uplink resource exists in the first time period.

In this embodiment of this application, a semi-persistent resource use time period is not in the first time period. It may be understood as that semi-persistent resource indication information is received in the first time period or before the start moment of the first time period, and a resource use time period indicated by the semi-persistent resource indication information is not in the first time period. It should be noted that any two implementations described in Implementation 1 may be combined. For example, that no uplink resource used for transmission of the first data exists in the first time period includes: No dynamic resource indication information is received in the first time period, and no semi-persistent uplink resource exists in the first time period. This is not limited in this application.

It may be understood that when the first information is used to request the uplink resource used for transmission of the first data, and the terminal device has triggered the second information, if no uplink resource exists in the first time period, the terminal device triggers the first information. The terminal device determines, based on whether the uplink resource used for transmission of the first data exists in a time period, whether to trigger the first information. Therefore, incorrect triggering of the first information can be avoided as much as possible, in other words, incorrect reporting of the first information can be avoided as much as possible, thereby further reducing a waste of uplink resources.

Optionally, in Implementation 1, an implementation process in which the terminal device triggers the first information may be as follows: The terminal device triggers the first information at the end moment of the first time period.

It may be understood that, because the dynamic resource indication information may indicate the uplink resource used for transmission of the first data, if the dynamic resource indication information is not received in the first time period, it may indicate that no uplink resource exists in the first time period. However, even if the dynamic resource indication information is received in the first time period, if the resource use time period indicated by the dynamic resource indication information is not in the first time period, it may also indicate that no uplink resource exists in the first time period. In other words, this embodiment of this application provides two implementations of determining that no uplink resource exists in the first time period, so that whether no uplink resource exists in the first time period can be determined in the foregoing two implementations.

For example, the dynamic resource indication information may be DCI. The DCI may indicate an uplink resource and a slot offset. In this case, the terminal device may determine, based on the slot offset, the resource use time period indicated by the dynamic resource indication information, and compare the resource use time period with the first time period, to determine whether the resource use time period is in the first time period. Certainly, the foregoing is merely example descriptions of the case that no uplink resource used for transmission of the first data exists in the first time period, and that no uplink resource used for transmission of the first data exists in the first time period may further include another condition. This is not limited in this application.

In a possible implementation (denoted as Implementation 2), that no uplink resource exists in the first time period includes any one of the following:
dynamic resource indication information is received before the start moment of the first time period, and a resource use time period indicated by the dynamic resource indication information is not in the first time period; or
no semi-persistent uplink resource exists in the first time period.

In this embodiment of this application, a semi-persistent resource use time period is not in the first time period. It may also be understood as that semi-persistent resource indication information is received before the start moment of the first time period, and a resource use time period indicated by the semi-persistent resource indication information is not in the first time period.

It should be noted that the two implementations described in Implementation 2 may also be combined. This is not limited in this application.

It may be understood that, in this embodiment of this application, the terminal device determines, based on whether the dynamic resource indication information exists in the first time period and/or whether an uplink resource indicated by the dynamic resource indication information can be used in the first time period, whether the uplink resource exists in the first time period. In this case, after determining information in the first time period, the terminal device may trigger the first information at the end moment of the first time period, so that the terminal device can trigger the first information in a timely manner.

Optionally, in Implementation 2, an implementation process in which the terminal device triggers the first information may be as follows: The terminal device triggers the first information at the start moment of the first time period.

It may be understood that, even if the dynamic resource indication information is received before the start moment of the first time period, if the resource use time period indicated by the dynamic resource indication information is not in the first time period, it may also indicate that no uplink resource exists in the first time period. In addition, even if the semi-persistent resource indication information is received before the start moment of the first time period, if the resource use time period indicated by the semi-persistent resource indication information is not in the first time period, it may also indicate that no uplink resource exists in the first time period. In other words, this embodiment of this application provides other two implementations of determining that no uplink resource exists in the first time period, so that whether no uplink resource exists in the first time period can be determined in the foregoing two implementations.

For example, the semi-persistent resource indication information may be RRC information. The RRC information is used to configure configured grant (Configured Grant, CG) scheduling for the terminal device, that is, configure a CG uplink resource, a periodicity of the CG uplink resource, and a time-frequency resource (for example, locations of a symbol and a subcarrier occupied in a slot) of the CG uplink resource to the terminal device. In this case, the terminal device may determine, based on the time-frequency resource and the periodicity of the uplink resource, the resource use time period indicated by the semi-persistent resource indication information, and compare the resource use time period with the first time period, to determine whether the resource use time period is in the first time period. Alternatively, the semi-persistent resource indication information may be RRC information and DCI. The RRC information is used to configure a parameter like a CG periodicity for the terminal, and the DCI indicates a CG time-frequency resource. Then, the terminal device performs periodic transmission based on the time-frequency domain resource indicated by the DCI and the periodicity configured by using the RRC information, until receiving another piece of DCI (for example, deactivation signaling) to instruct the terminal device to stop semi-persistent transmission.

Certainly, the foregoing is merely example descriptions of the case that no uplink resource exists in the first time period, and that no uplink resource used for transmission of the first data exists in the first time period may further include another condition. For example, that no uplink resource exists in the first time period includes a condition similar to the "condition for triggering the SR" described above. This is not limited in this application.

It can be learned from the foregoing related descriptions of the "condition for triggering the SR" that, the condition for triggering the SR may include at least one of the following: Condition 3, Condition 4, or Condition 5.

Condition 3: A logical channel SR-delay timer configured for a logical channel corresponding to a BSR is not running, and the terminal device currently has no uplink resource available for transmission of pending data.

Condition 4: A logical channel SR-delay timer configured for a logical channel corresponding to a BSR is not running, an SR-mask corresponding to the logical channel for triggering the BSR is set to disabled, and the MAC entity configures uplink resource grant scheduling for the terminal device.

Condition 5: A logical channel SR-delay timer configured for a logical channel corresponding to a BSR is not running, and the terminal device currently has an uplink resource available for transmission of pending data, but the uplink resource does not meet a parameter requirement of pending data on the logical channel.

In other words, the conditions for triggering the SR described in Condition 3 to Condition 5 all include that the logical channel SR-delay timer is not running. In view of this, an embodiment of this application further provides a first information triggering method. The method is as follows: For whether the terminal device triggers the first information, reference may not be made to a status of the logical channel SR-delay timer. In other words, the status of the logical channel SR-delay timer may not affect whether the terminal device triggers the first information. In this way, the terminal device may trigger the first information even if the logical channel SR-delay timer is running.

In this case, a condition for triggering the first information provided in this embodiment of this application may include at least one of the following: Condition 8 to Condition 10.

Condition 8: The terminal device currently has no uplink resource available for transmission of pending data.

Condition 9: An SR-mask corresponding to the logical channel is set to disabled, and the MAC entity configures uplink resource grant scheduling for the terminal device.

Condition 10: The terminal device currently has an uplink resource available for transmission of pending data, but the uplink resource does not meet a parameter requirement of pending data on the logical channel.

It should be noted that Condition 8 to Condition 10 may be combined with the foregoing conditions for triggering the first information (for example, no uplink resource exists in the first time period), or may not be combined with the foregoing conditions for triggering the first information. This is not limited in this application. In other words, in S901, the first information may be triggered based on any one of Condition 8 to Condition 10, or may be triggered based on the foregoing conditions for triggering the first information.

It may be understood that, that a logical channel SR-delay timer is configured for a logical channel corresponding to an SR may be understood as that logical channel SR-delay timer applied corresponding to the logical channel is enabled. However, the condition for triggering the first information may be irrelevant to a status of the logical channel SR-delay timer corresponding to the logical channel, and may also be irrelevant to a status of the logical channel SR-delay timer applied corresponding to the logical channel.

For example, for a logical channel, when a BSR has been triggered on the logical channel (for example, the BSR is triggered when there is newly transmitted data), if logical channel SR-delay timer applied of the logical channel is enabled, a logical channel SR-delay timer may be started or restarted. In this case, the second information (for example, a DSR) is triggered if a remaining transmission delay budget of at least one piece of data is less than the threshold, although the logical channel SR-delay timer is running, the first information (for example, an SR) may still be triggered based on the foregoing conditions (for example, Condition 8 to Condition 10 or the conditions described above).

Optionally, the SR triggered by the DSR and the SR triggered by the BSR may be in a same SR configuration, or may be in different SR configurations. In the foregoing case, the terminal device may subsequently send the SR to the network device on an SR resource corresponding to the DSR. Correspondingly, the network device may receive the SR, and determine, based on the SR, that the terminal device has a pending DSR, to perform resource scheduling.

It may be understood that, the SR triggered by the DSR is not affected by the logical channel SR-delay timer applied. It may also be understood as that, for the SR triggered by the DSR, regardless of whether the logical channel SR-delay timer applied is enabled, it is considered that the SR delay-trigger timer applied is disabled. In other words, if there is a triggered DSR, logical channel SR-delay timer applied corresponding to a logical channel for triggering the DSR is disabled.

Optionally, the triggering of the SR corresponding to the DSR may be completely independent of the logical channel SR-delay timer applied and/or a logical channel SR-delay timer corresponding to the logical channel for triggering the DSR. For example, after the DSR is triggered, regardless of whether the logical channel SR-delay timer applied corresponding to the logical channel is enabled, the logical channel SR-delay timer may not be started or restarted. For example, when a BSR (for example, a regular BSR) is triggered on a logical channel, or there is a triggered BSR, if logical channel SR-delay timer applied is enabled, a logical channel SR-delay timer may be started or restarted. When a DSR is triggered on a logical channel, or there is a triggered DSR, if logical channel SR-delay timer applied is enabled, a logical channel SR-delay timer may not be started or restarted.

It may be understood that, that the first information (for example, a DSR) or the second information (for example, a DSR) is triggered on a logical channel may be understood as that pending data on the logical channel includes pending data that meets a condition for triggering the first information or the second information.

It may be understood that when the first information is used to request the uplink resource used for transmission of the first data, and the terminal device has triggered the second information, if no uplink resource exists in the first time period, the terminal device triggers the first information. The terminal device determines, based on whether the uplink resource used for transmission of the first data exists in a time period, whether to trigger the first information. Therefore, incorrect triggering of the first information can be avoided as much as possible, in other words, incorrect reporting of the first information can be avoided as much as possible, thereby further reducing a waste of uplink resources.

It can be learned from the foregoing related descriptions of the "first information" that the first information may be used to request the uplink resource used for transmission of the first data. In this case, the first information may include an SR. However, after the terminal device triggers the SR, the terminal device may report the SR to the network device based on an SR configuration when there is a resource available for the SR. However, the SR may include the SR corresponding to the BSR and/or the SR corresponding to the DSR. Therefore, the terminal device may separately configure SR configuration information for the SR corresponding to the DSR, so that the terminal device can distinguish between the SR corresponding to the BSR and the SR corresponding to the DSR. Therefore, an embodiment of this application further provides an SR triggering method, so that when the DSR is triggered, the terminal device requests an uplink resource from the network device. Implementations in which the terminal device configures information for the SR corresponding to the DSR may include Implementation 1 and Implementation 2.

Implementation 1: Configure same first SR configuration information for all of the M logical channels. The first SR configuration information indicates an SR parameter triggered when a DSR needs to be sent. In this case, the DSR may be triggered on (or by data on) any logical channel. In this case, it may be understood as that, when the DSR has been triggered, if an SR needs to be triggered (or a condition for triggering an SR is met), the SR is triggered based on the first SR configuration information, or a related parameter of the triggered SR, for example, sr-ProhibitTimer and/or a time-frequency resource for SR transmission.

With reference to Implementation 1, the terminal device may report, to the network device based on the first SR configuration information, an SR triggered by a DSR corresponding to each logical channel. In this way, sending restriction information (for example, sr-ProhibitTimer and sr-TransMax) in the SR configuration information is applicable to SRs triggered by DSRs corresponding to the M logical channels (referred to as an SR corresponding to a logical channel for short below).

For example, it is assumed that the terminal device has a logical channel 1 and a logical channel 2.

An SR corresponding to the logical channel 1 is triggered at a moment T1. If an uplink resource available for sending of the SR corresponding to the logical channel 1 exists at a moment T2, the moment T2 is not in an sr-ProhibitTimer running time period, and a current quantity of SR transmissions (SR_COUNTER) does not reach sr-TransMax, the terminal device may send, to the network device on a time-frequency resource corresponding to the first SR configuration information, the SR corresponding to the logical channel 1. In addition, the terminal device may start sr-ProhibitTimer, and increase the current quantity of SR transmissions by 1, to obtain a new quantity of SR transmissions (for example, 1). The moment T2 is later than the moment T1.

If an SR corresponding to the logical channel 2 is triggered at a moment T3, and an uplink resource available for transmission of the SR corresponding to the logical channel 2 exists at a moment T4, the terminal device may perform transmission of, on the uplink resource at the moment T4 based on the first SR configuration information, the SR corresponding to the logical channel 2, provided that the moment T4 is not in an sr-ProhibitTimer running time period and a current quantity of SR transmissions does not reach sr-TransMax. The moment T3 is later than the moment T2, and the moment T4 is later than the moment T3.

In other words, when the moment T4 is in the running time period, the terminal device cannot perform transmission of, on the uplink resource at the moment T4 based on the first SR configuration information, the SR corresponding to the logical channel 2.

When the moment T4 is not in the running time period, the terminal device may determine whether the current quantity of SR transmissions reaches sr-TransMax. If the current quantity of SR transmissions does not reach sr-TransMax, the terminal device may perform transmission of, on the uplink resource at the moment T4 based on the first SR configuration information, the SR corresponding to the logical channel 2, start sr-ProhibitTimer again, and increase the current quantity of SR transmissions by 1 to obtain a new quantity of SR transmissions (for example, 2). If the current quantity of SR transmissions reaches sr-TransMax, the terminal device still cannot perform transmission of, on the uplink resource at the moment T4 based on the first SR configuration information, the SR corresponding to the logical channel 2.

In addition, if the terminal device cancels all SRs at a moment T5, the terminal device may end sr-ProhibitTimer, and set the current quantity of SR transmissions to 0. If the terminal device re-triggers, at a subsequent moment, the SR corresponding to the logical channel, the terminal device may send the SR according to the foregoing method. The moment T5 is later than the moment T4.

In this case, different logical channels in the M logical channels use a same SR configuration, namely, a first SR configuration.

Further, that the same first SR configuration information is configured for all of the M logical channels may mean that there is a dedicated SR configuration (for example, the first SR configuration), and the SR configuration is used only for an SR triggered by a DSR. In other words, different from configuring corresponding SR configuration information (for example, configuring an associated SR ID) for each of the M logical channels, the network device may configure a dedicated SR configuration for the terminal device.

In this embodiment of this application, that an SR corresponding to a logical channel is triggered may be understood as that data on the logical channel triggers the SR, or may be understood as that any data on the logical channel meets a condition for triggering the SR, and therefore the SR is triggered.

That an SR corresponding to a logical channel is triggered may alternatively be understood as that after data on the logical channel triggers a DSR (for example, the second information), a condition for triggering the SR is met (for example, no resource exists in the first time period), and therefore the SR is triggered. A condition for triggering the DSR/SR may be the condition described in this specification, or may be another condition. This is not limited in this application.

Optionally, a process of determining, by any one of the M logical channels, whether to trigger the first information (for example, an SR) is not affected by a status of a logical channel SR-delay timer and/or a status of logical channel SR-delay timer applied. In this way, in Implementation 1, the status of the logical channel SR-delay timer affects only triggering of the SR corresponding to the BSR, and does not affect triggering of the SR corresponding to the first SR configuration information.

It is assumed that the second information (for example, a DSR) is triggered on any logical channel. In this case, whether the first information (for example, an SR) is triggered on the logical channel is not affected by a status of a logical channel SR-delay timer and/or a status of logical channel SR-delay timer applied. In other words, regardless of whether the logical channel SR-delay timer is running and/or whether the logical channel SR-delay timer applied is running, determining whether to trigger the first information (for example, the SR) on the logical channel is not affected.

Implementation 2: Configure second SR configuration information for the first logical channel, and configure third SR configuration information for the second logical channel. In other words, different logical channels may correspond to different SR configuration information. The second SR configuration information indicates an SR parameter triggered when the first logical channel has a DSR to be sent, and the third SR configuration information indicates an SR parameter triggered when the second logical channel has a DSR to be sent. When a second SR configuration is different from a third SR configuration, an SR corresponding to the first logical channel and an SR corresponding to the second logical channel do not affect each other. For example, after the SR corresponding to the first logical channel is sent, started sr-prohibitTimer does not affect sending of the SR corresponding to the second logical channel.

With reference to Implementation 2, the terminal device may report, to the network device based on SR configuration information corresponding to each logical channel, an SR corresponding to each logical channel. In this way, sending restriction information in the SR configuration information is applicable only to SRs corresponding to a same logical channel. In other words, logical channels corresponding to different SRs do not affect each other.

For example, it is assumed that the terminal device has a logical channel 3 and a logical channel 4, second SR configuration information is configured for the logical channel 3, and third SR configuration information is configured for the logical channel 4.

An SR corresponding to the logical channel 3 is triggered at a moment T6. If an uplink resource available for sending of the SR corresponding to the logical channel 3 exists at a moment T7, the moment T7 is not in an sr-ProhibitTimer running time period corresponding to the second SR configuration information, and a current quantity of SR transmissions does not reach sr-TransMax corresponding to the second SR configuration information, the terminal device may send, on the uplink resource at the moment T7 based on the second SR configuration information, the SR corresponding to the logical channel 3 to the network device. In addition, the terminal device may start sr-ProhibitTimer corresponding to the second SR configuration information, and increase the current quantity of SR transmissions corresponding to the second SR configuration information by 1, to obtain a new quantity of SR transmissions of the second SR configuration information. The moment T7 is later than the moment T6.

If an SR corresponding to the logical channel 4 is triggered at a moment T8, and an uplink resource available for transmission of the SR corresponding to the logical channel 4 exists at a moment T9, the terminal device may perform transmission of, on the uplink resource at the moment T9 based on the third SR configuration information, the SR corresponding to the logical channel 4, provided that the moment T9 is not in an sr-ProhibitTimer running time period corresponding to the third SR configuration information and a current quantity of SR transmissions of the third SR configuration information does not reach sr-TransMax corresponding to the third SR configuration information. The moment T9 is later than the moment T8, and the moment T8 is later than the moment T7. In other words, sr-ProhibitTimer and sr-TransMax corresponding to the logical channel 3 do not affect sr-ProhibitTimer and sr-TransMax corresponding to the logical channel 4.

In some possible implementations, SR configuration information corresponding to the BSR and SR configuration information corresponding to the DSR may be two pieces of independently configured SR configuration information. For example, a first SR configuration and a second SR configuration are configured for the first logical channel. The first SR configuration indicates the SR corresponding to the BSR, and the second SR configuration indicates the SR corresponding to the DSR. The first SR configuration and the second SR configuration may be a same SR configuration. For example, two SR IDs are configured for the first logical channel, and the two SR IDs may be the same, that is, it indicates that the BSR and the DSR correspond to a same SR configuration. In this case, SR configuration parameters such as sr-ProhibitTimer and sr-TransMax may be shared.

Optionally, when the BSR and the DSR correspond to a same SR configuration, sr-ProhibitTimer in the SR configuration corresponding to the BSR may not limit sending of the SR corresponding to the DSR, but limits sending of the SR corresponding to the BSR. In other words, during running of sr-ProhibitTimer in the SR configuration corresponding to the BSR, the terminal device can send the SR corresponding to the DSR to the network device, but the terminal device cannot send the SR corresponding to the BSR to the network device.

When the SR configuration information corresponding to the BSR and the SR configuration information corresponding to the DSR are independently configured, sending restriction information in the SR configuration information corresponding to the BSR may be referred to as sr-prohibitTimer and sr-TransMax, and sending restriction information in the SR configuration information corresponding to the DSR may be referred to as sr-ProhibitTimer-r18 and sr-TransMax-r18. In this way, one logical channel or logical channel group may correspond to two pieces of SR configuration information, and sending restriction information in the two pieces of SR configuration information does not interfere with each other.

For example, it is assumed that the terminal device has a logical channel 5.

An SR (for example, the SR corresponding to the BSR, which may be denoted as an SR 1) corresponding to the logical channel 5 is triggered at a moment T10. If an uplink resource available for sending of the SR 1 exists at a moment T11, the moment T11 is not in an sr-ProhibitTimer running time period corresponding to the SR 1, and a current quantity of SR transmissions of the SR 1 does not reach sr-TransMax corresponding to the SR 1, the terminal device may send the SR 1 to the network device based on the SR configuration information. In addition, the terminal device may start sr-ProhibitTimer of the SR 1, and increase the current quantity of SR transmissions of the SR 1 by 1, to obtain a new quantity of SR 1 transmissions. The moment T11 is later than the moment T10.

If another SR (for example, the SR corresponding to the DSR, which may be denoted as an SR 2) corresponding to the logical channel 5 is triggered at a moment T12, and an uplink resource available for transmission of the SR 2 exists at a moment T13, the terminal device may perform transmission of the SR 2 on the uplink resource at the moment T13, provided that the moment T13 is not in an sr-ProhibitTimer running time period corresponding to the SR 2 and a current quantity of SR transmissions of the SR 2 does not reach sr-TransMax of the SR 2. The moment T13 is later than the moment T12, and the moment T12 is later than the moment T11. In other words, sending restriction information of the SR 2 does not affect sending restriction information of the SR 1.

Optionally, when SR configuration information corresponding to the BSR and SR configuration information corresponding to the DSR are separately configured, a status of a logical channel SR-delay timer affects only triggering of the SR corresponding to the BSR, and does not affect triggering of the SR corresponding to the DSR. For example, fourth SR configuration information and second SR configuration information (or third SR configuration information) are configured for a logical channel. The fourth SR configuration information indicates configuration information of the SR corresponding to the BSR, and the second SR configuration information indicates configuration information of the SR corresponding to the DSR. In this case, the status of the logical channel SR-delay timer affects only triggering of an SR (for example, the SR corresponding to the BSR) corresponding to the fourth SR configuration information, and does not affect triggering of an SR (for example, the SR corresponding to the DSR) corresponding to the second SR configuration information. For example, if there is a triggered BSR (for a trigger condition, refer to the foregoing descriptions), and there is a logical channel SR-delay timer that is running, the SR corresponding to the fourth SR configuration information is not triggered; if there is a triggered DSR (for a trigger condition, refer to the foregoing descriptions), and regardless of whether there is a logical channel SR-delay timer that is running, the SR corresponding to the second SR configuration information is triggered based on the condition for triggering the first information (for example, an SR); or if there is a triggered DSR, and regardless of whether logical channel SR-delay timer applied is enabled, the SR corresponding to the second SR configuration information is triggered based on the condition for triggering the first information (for example, an SR).

It is assumed that the BSR and the DSR are triggered on the first logical channel, and there is a logical channel SR-delay timer that is running. In this case, the terminal device may not trigger the SR corresponding to the BSR, and does not need to perform transmission of the SR on a resource corresponding to the fourth SR configuration information. The terminal device may trigger the SR based on a condition for triggering the SR for the logical channel that is used for triggering the DSR (for example, in this case, there is no uplink resource available for transmission of pending data), and perform transmission of the SR on a resource corresponding to the second SR configuration information.

However, when SR configuration information corresponding to the BSR and SR configuration information corresponding to the DSR are jointly configured, sending restriction information in the SR configuration information is applicable to BSRs and DSRs of all logical channels. An implementation process in which the terminal device sends the SR in this case may be understood with reference to the foregoing descriptions of the corresponding part. Details are not described herein again.

It should be noted that, in a general technology, each SR configuration may correspond to one physical layer priority. When a sending resource of the SR overlaps a physical layer uplink transmission resource, for example, a physical uplink shared channel (Physical uplink shared channel, PUSCH), in other words, a time-frequency domain resource occupied by the SR overlaps a time-frequency resource occupied by an uplink resource for transmission of data, the terminal device determines to send one of the SR and the data based on a physical layer priority of the SR and a physical layer priority of the uplink resource for transmission of the data. When the physical layer priority of the SR is the same as the physical layer priority of the uplink resource for transmission of the data, the data is preferentially sent, and the SR is discarded, resulting in an increase in a scheduling delay. Therefore, this application further provides a transmission method for the SR corresponding to the DSR. When the SR corresponds to the DSR, or the SR is triggered on a logical channel configured to report delay information, if a physical layer priority of the SR is the same as a physical layer priority of an uplink resource for transmission of data, the terminal device preferentially sends the SR.

In other words, the terminal device configures a first priority for the SR corresponding to the DSR, and configures a second priority for service data. When values of the first priority and the second priority are the same, the first priority is higher than the priority of the service data. The terminal device may determine a first priority of SR configuration information corresponding to the logical channel and a second priority of any uplink transmission resource. When the first priority is not lower than the second priority, for example, the first priority is higher than or equal to the second priority, the terminal device may preferentially send, to the network device based on the SR configuration information corresponding to the logical channel, the SR corresponding to the logical channel. When an uplink resource used for transmission of the SR corresponding to the logical channel exists, the terminal device may directly send, on the uplink resource, the SR corresponding to the logical channel to the network device. When the first priority is lower than the second priority, the terminal device may preferentially send data to the network device on an uplink transmission resource corresponding to the second priority.

For example, it is assumed that an SR corresponding to a logical channel 6 is triggered at a moment T14, a first priority of the SR is a physical layer priority index (phy-index) 0, and it is estimated that the SR corresponding to the logical channel 6 is sent to the network device at a moment T15. If service data 1 is sent on an uplink transmission resource 1 at the moment T15, and the uplink transmission resource 1 overlaps a resource of the SR, where the second priority of the uplink transmission resource is also phy-index0, the terminal device may not send data on the uplink transmission resource 1, and may send, on the uplink transmission resource 1, the SR corresponding to the logical channel 6 to the network device.

Optionally, it can be learned from the communication method shown in FIG. 9 that, the terminal device may trigger the first information, and cancel the triggering of the first information when the first condition is met. However, the communication method provided in this embodiment of this application further includes: The terminal device triggers third information, and cancels the triggering of the third information when a second condition is met.

The third information is used to request an uplink resource used for transmission of third data, or the third information indicates third delay information of third data. The third data corresponds to the first logical channel. The first logical channel is any one of the M logical channels. The second condition is related to a remaining transmission delay budget of the third data.

In a possible implementation, the second condition may include that the remaining transmission delay budget of the third data is less than or equal to a delay threshold. The third data is all or a part of pending data on the first logical channel. Certainly, the foregoing is merely example descriptions of the second condition, and the second condition may further include another condition. This is not limited in this application.

For example, it can be learned from the foregoing related descriptions of the "threshold" that the threshold may be a threshold (denoted as a first threshold) of a remaining transmission delay budget of pending data that is used to trigger a DSR, or may be a threshold (denoted as a second threshold) of a remaining transmission delay budget of pending data included in a DSR. The first threshold and the second threshold may be the same or different. When the first threshold is the same as the second threshold, the delay threshold may be less than the first threshold (or the second threshold). When the first threshold is different from the second threshold, the delay threshold may be less than a smaller one of the first threshold and the second threshold. Certainly, the foregoing is merely example descriptions of the delay threshold, and the delay threshold may alternatively be another threshold. This is not limited in this application.

Optionally, the communication method provided in this embodiment of this application further includes: The terminal device triggers fourth information, and cancels the triggering of the fourth information when a third condition is met.

The fourth information is used to request an uplink resource used for transmission of the fourth data. The fourth data corresponds to the second logical channel. The second logical channel is any one of the M logical channels. The third condition is related to fifth information. The fifth information indicates fourth delay information of the fourth data.

In a possible implementation, the third condition may include that triggering of the fifth information is canceled. Certainly, the foregoing is merely example descriptions of the third condition, and the third condition may further include another condition. This is not limited in this application.

An embodiment of this application further provides a DSR triggering method. The DSR triggering method may include: When an uplink resource can accommodate all pending data, and the uplink resource can further carry sixth information and a third subheader, the terminal device may trigger the sixth information.

The sixth information indicates delay information of all or a part of pending data on the M logical channels, and/or data volumes of all the pending data or a data volume of the part of pending data on the M logical channels. The third subheader corresponds to the sixth information.

In other words, the sixth information may include the delay information of all the pending data on the M logical channels; the sixth information may include the delay information of all the pending data and the data volumes of all the pending data on the M logical channels; the sixth information may include the delay information of the part of pending data on the M logical channels; or the sixth information may include the delay information of the part of pending data and the data volume of the part of pending data on the M logical channels. Certainly, the foregoing is merely example descriptions of the sixth information, and the sixth information may further include other information. This is not limited in this application.

In a possible implementation, an implementation process in which the terminal device triggers the sixth information may be as follows: When the terminal device receives an uplink resource, the terminal device may determine, from the M logical channels based on a parameter like a priority of a logical channel and whether transmission of data on the logical channel can be performed on the uplink resource, one or more logical channels that can occupy the uplink resource, and cause pending data on the one or more determined logical channels to occupy the uplink resource.

If the pending data on the one or more determined logical channels does not completely occupy the uplink resource, the terminal device may determine whether a first remaining uplink resource in the uplink resource can carry the sixth information and the third subheader. The first remaining uplink resource is an uplink resource other than the uplink resource occupied by the pending data in the uplink resource. When the first remaining uplink resource can carry the sixth information and the third subheader, the terminal device may trigger the sixth information.

Optionally, in this embodiment of this application, it is assumed that an amount of information that can be carried by the first remaining uplink resource may be a first information amount.

When the sixth information includes the delay information of all the pending data and the data volumes of all the pending data on the M logical channels, an information amount of the sixth information may be a second information amount.

When the sixth information includes the delay information of the part of pending data and the data volume of the part of pending data on the M logical channels, an information amount of the sixth information is a third information amount.

Based on this, when the first information amount is greater than or equal to the second information amount, the terminal device may trigger the sixth information. In this case, the sixth information includes the delay information of all the pending data and the data volumes of all the pending data on the M logical channels. However, when the first information amount is less than the second information amount, the terminal device may not trigger the sixth information.

When the first information amount is less than the second information amount, and the first information amount is greater than or equal to the third information amount, the terminal device may trigger the sixth information. In this case, the sixth information includes the delay information of the part of pending data and the data volume of the part of pending data on the M logical channels. However, when the first information amount is less than the third information amount, the terminal device may not trigger the sixth information.

In a possible implementation, if the sixth information may include the delay information of the part of pending data and the data volume of the part of pending data on the M logical channels, the terminal device may determine, from all the pending data on the M logical channels based on a priority of a logical channel to which the pending data belongs, the part of pending data included in the sixth information.

For example, it is assumed that the M logical channels include a logical channel 4 and a logical channel 5, there is pending data 4 on the logical channel 4, there is pending data 5 on the logical channel 5, and a priority of the logical channel 4 is higher than a priority of the logical channel 5.

In this example, the second information amount is an information amount of the sixth information when the sixth information includes delay information and a data volume of the pending data 4 and delay information and a data volume of the pending data 5.

The third information amount is an information amount of the sixth information when the sixth information includes delay information and a data volume of the pending data 4 or delay information and a data volume of the pending data 5.

If the first information amount is less than the second information amount, and the first information amount is greater than or equal to the third information amount, the terminal device may trigger the sixth information. The sixth information may include the delay information and the data volume of the pending data 4, or the sixth information includes the delay information and the data volume of the pending data 5. However, in this example, the priority of the logical channel 4 is higher than the priority of the logical channel 5. In other words, a priority of the pending data 4 is higher than a priority of the pending data 5. In this way, the sixth information may include the delay information and the data volume of the pending data 4.

In another possible implementation, if the sixth information may include the delay information of the part of pending data and the data volume of the part of pending data on the M logical channels, the terminal device may determine, from all the pending data on the M logical channels based on an urgency degree of the pending data, the part of pending data included in the sixth information.

With reference to the foregoing example, when the sixth information may include the delay information and the data volume of the pending data 4, or the sixth information includes the delay information and the data volume of the pending data 5, if an urgency degree of the pending data 5 is higher than an urgency degree of the pending data 4, the sixth information may include the delay information and the data volume of the pending data 5.

Optionally, the DSR triggering method may include: When the uplink resource can accommodate all the pending data, the uplink resource can further carry the sixth information and the third subheader, and there is pending data on the M logical channels, the terminal device may trigger the sixth information. In this case, the sixth information may be understood with reference to the foregoing related descriptions of the sixth information. Details are not described herein again.

Optionally, the DSR triggering method may include: When the uplink resource can accommodate all the pending data, the uplink resource can further carry the sixth information and the third subheader, and there is pending data whose remaining transmission delay budget is less than a threshold and that is on the M logical channels, the terminal device may trigger the sixth information. In this case, the sixth information may include delay information and a data volume of pending data whose remaining transmission delay budget is less than the threshold and that is in all the pending data on the M logical channels.

It may be understood that when the uplink resource can carry all the pending data, and can further carry the sixth information and the third subheader, the terminal device may trigger the sixth information. In this way, when it is ensured that transmission of all the pending data is normally performed, more information about the terminal device, for example, the sixth information, can be reported on the remaining resource, so that the network device can better schedule an uplink resource based on the information about the terminal device.

Certainly, the foregoing is merely example descriptions of the DSR triggering method provided in this embodiment of this application. The DSR triggering method may further include another method, for example, the DSR triggering method described in the foregoing related descriptions of the "DSR". This is not limited in this application.

In some examples, the sixth information may include a DSR. Certainly, the foregoing is merely example descriptions of the sixth information, and the sixth information may further include other information. This is not limited in this application.

An embodiment of this application further provides a BSR triggering method. The BSR triggering method may include: When an uplink resource can carry all pending data, sixth information, and a third subheader, and the uplink resource can further carry seventh information and a fourth subheader, the terminal device may trigger the seventh information. The seventh information indicates data volumes of all pending data or a data volume of a part of pending data on all logical channel groups. The fourth subheader corresponds to the seventh information.

In a possible implementation, an implementation process in which the terminal device triggers the seventh information may be as follows: When the terminal device receives an uplink resource, the terminal device may determine, from the M logical channels based on a parameter like a priority of a logical channel and whether transmission of data on the logical channel can be performed on the uplink resource, one or more logical channels that can occupy the uplink resource, and cause pending data on the one or more determined logical channels to occupy the uplink resource.

If the pending data on the one or more determined logical channels, the sixth information, and the third subheader do not completely occupy the uplink resource, the terminal device may determine whether a second remaining uplink resource in the uplink resource can carry the seventh information and the fourth subheader. The second remaining uplink resource is an uplink resource other than the uplink resource occupied by the pending data, the sixth information, and the third subheader in the uplink resource. When the second remaining uplink resource can carry the seventh information and the fourth subheader, the terminal device may trigger the seventh information.

It should be understood that the sixth information may be understood with reference to the foregoing descriptions of the corresponding part. Details are not described herein again.

Optionally, in this embodiment of this application, it is assumed that an amount of information that can be carried by the second remaining uplink resource may be a fourth information amount.

When the seventh information includes the data volumes of all the pending data on all the logical channel groups, an information amount of the seventh information may be a fifth information amount.

When the seventh information includes the data volume of the part of pending data on all the logical channel groups, an information amount of the seventh information is a sixth information amount.

Based on this, when the fourth information amount is greater than or equal to the fifth information amount, the terminal device may trigger the seventh information. In this case, the seventh information includes the data volumes of all the pending data on all the logical channel groups. However, when the fourth information amount is less than the fifth information amount, the terminal device may not trigger the seventh information.

When the fourth information amount is less than the fifth information amount, and the fourth information amount is greater than or equal to the sixth information amount, the terminal device may trigger the seventh information. In this case, the seventh information includes the data volume of the part of pending data on all the logical channel groups. However, when the fourth information amount is less than the sixth information amount, the terminal device may not trigger the seventh information.

In a possible implementation, if the seventh information may include the data volume of the part of pending data on all the logical channel groups, the terminal device may determine, from all the pending data on all the logical channel groups based on a priority of a logical channel to which the pending data belongs, the part of pending data included in the sixth information.

For example, it is assumed that all the logical channel groups include a logical channel group 6 and a logical channel group 7, there is pending data 6 on the logical channel group 6, there is pending data 7 on the logical channel group 7, and a priority of the logical channel group 6 is higher than a priority of the logical channel group 7.

In this example, the fifth information amount is an information amount of the seventh information when the seventh information includes a data volume of the pending data 6 and a data volume of the pending data 7.

The sixth information amount is an information amount of the seventh information when the seventh information includes a data volume of the pending data 6 or a data volume of the pending data 7.

If the fourth information amount is less than the fifth information amount, and the fourth information amount is greater than or equal to the sixth information amount, the terminal device may trigger the seventh information. The seventh information may include the data volume of the pending data 6, or the seventh information includes the data volume of the pending data 7. However, in this example, the priority of the logical channel group 6 is higher than the priority of the logical channel group 7. In other words, a priority of the pending data 6 is higher than a priority of the pending data 7. In this way, the seventh information may include the data volume of the pending data 6.

It may be understood that when the uplink resource can carry all the pending data, the sixth information, and the third subheader, and can further carry the seventh information and the fourth subheader, the terminal device may trigger the seventh information. In this way, when it is ensured that transmission of all the pending data and transmission of all DSRs are normally performed, more information about the terminal device, for example, the seventh information, can be reported on the remaining resource, so that the network device can better schedule an uplink resource based on the information about the terminal device.

It should be noted that both the DSR triggering method and the BSR triggering method may be applied to a logical channel group. In this case, a priority of the logical channel group may be understood as a priority of a logical channel with a highest priority in the logical channel group.

In an example, both the first remaining uplink resource and the second remaining uplink resource may be padding bits. The padding bit is a useless bit filled when the uplink resource is not used up, for example, when an amount of pending data is less than a capacity of the uplink resource, so that the uplink resource is not vacant. Certainly, the foregoing is merely example descriptions of the first remaining uplink resource and the second remaining uplink resource. The first remaining uplink resource and the second remaining uplink resource may alternatively be resources of another type. This is not limited in this application.

It should be noted that, the term "carry" in this application may alternatively be replaced with the term "accommodate". Certainly, the foregoing is merely example descriptions of replacing the term "carry", and the term "carry" may alternatively be another term having a same meaning. This is not limited in this application.

It should be noted that the communication method described in embodiments of this application may be applied to a logical channel group. In this way, a logical channel group is used as a granularity, so that the communication method described in this application is applicable to triggering or triggering cancellation of an SR or a DSR corresponding to one or more logical channel groups configured to report delay information. In other words, all the logical channels described in embodiments of this application may be replaced with logical channel groups.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the terminal device in the foregoing method embodiments, or an apparatus including the foregoing terminal device, or a component that can be used in the terminal device. It may be understood that, to implement the foregoing functions, the communication apparatus includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that division into the modules in embodiments of this application is an example, and is merely logical function division. In actual implementation, there may be another division manner.

For example, the communication apparatus is the terminal device in the foregoing method embodiments. FIG. 12 is a diagram of a structure of a terminal device 120. The terminal device 120 includes a processing module 1201. Optionally, the terminal device 120 further includes a transceiver module 1202. The transceiver module 1202 may also be referred to as a transceiver unit, is configured to implement receiving and sending functions, and for example, may be a transceiver circuit, a transceiver machine, a transceiver, or a communication interface.

In a possible implementation, the processing module 1201 is configured to trigger first information, where the first information is used to request an uplink resource used for transmission of first data, or the first information indicates first delay information of first data, where the first data corresponds to M logical channels, the M logical channels are logical channels configured to report delay information, and M is a positive integer; and the processing module 1201 is further configured to cancel the triggering of the first information when a first condition is met, where the first condition is related to a first uplink resource and the first data, and the first uplink resource is allocated for transmission of the first data.

In some embodiments, the first condition includes at least one of the following: The first uplink resource bears transmission of the first data, and the first data includes all pending data on the M logical channels; or the first uplink resource bears transmission of the first data, and the first data includes pending data that is on the M logical channels and whose remaining transmission delay budget is less than a threshold, where a start moment of the remaining transmission delay budget is a moment at which the first information is sent, and an end moment of the remaining transmission delay budget is a moment at which transmission of the pending data is expected to be completed, or an end moment of the remaining transmission delay budget is a moment at which the pending data is discarded.

In some embodiments, when the first information indicates the first delay information of the first data, the first condition includes: The first uplink resource bears transmission of the first data, and the first uplink resource does not bear transmission of the first information and a first subheader, where the first subheader corresponds to the first information.

In some embodiments, when the first information is used to request an uplink resource used for transmission of first data, before the first information is triggered, the processing module 1201 is further configured to trigger second information, where the second information indicates the first delay information of the first data; and the processing module 1201 is further configured to trigger the first information when no uplink resource exists in a first time period, where the first time period is determined based on a moment at which the second information is triggered and preset duration.

In some embodiments, that no uplink resource exists in the first time period includes any one of the following: No dynamic resource indication information is received in the first time period; dynamic resource indication information is received in the first time period or before a start moment of the first time period, and a resource use time period indicated by the dynamic resource indication information is not in the first time period; or no semi-persistent uplink resource exists in the first time period.

In some embodiments, the processing module 1201 is further configured to trigger the first information at an end moment of the first time period.

In some embodiments, that no uplink resource exists in the first time period includes any one of the following: Dynamic resource indication information is received before a start moment of the first time period, and a resource use time period indicated by the dynamic resource indication information is not in the first time period; or no semi-persistent uplink resource exists in the first time period.

In some embodiments, the processing module 1201 is further configured to trigger the first information at the start moment of the first time period.

In some embodiments, the M logical channels are all logical channels configured to report the delay information.

In some embodiments, the first information includes a delay status report DSR.

In some embodiments, the first information includes a first DSR and a second DSR, the first DSR is a DSR triggered when first pending data meets a first configuration condition, the second DSR is a DSR triggered when second pending data meets a second configuration condition, the first pending data is pending data on a first logical channel, the second pending data is pending data on a second logical channel, and both the first logical channel and the second logical channel are in the M logical channels; and the processing module 1201 is further configured to cancel the first DSR and the second DSR when the first condition is met.

In some embodiments, the DSR includes delay information of pending data on the M logical channels.

In some embodiments, the first information includes a scheduling request SR.

In some embodiments, the first information includes a first SR and a second SR, the first SR is an SR triggered when the first pending data meets a third configuration condition, the second SR is an SR triggered when the second pending data meets a fourth configuration condition, the first pending data is pending data on the first logical channel, the second pending data is pending data on the second logical channel, and both the first logical channel and the second logical channel are in the M logical channels; and the canceling the triggering of the first information when the first condition is met includes: canceling the first SR and the second SR when the first condition is met.

In some embodiments, when the first logical channel is the same as the second logical channel, an arrival moment of the first pending data is earlier than an arrival moment of the second pending data.

All related content of each step in the foregoing method embodiments may be cited in function descriptions of a corresponding functional module. Details are not described herein again.

In this embodiment of this application, the terminal device 120 is presented in a form of obtaining each functional module through division in an integrated manner. The "module" herein may be an ASIC, a circuit, a processor that executes one or more software or firmware programs, a memory, an integrated logic circuit, and/or another device capable of providing the foregoing functions. In a simple embodiment, a person skilled in the art may figure out that the terminal device 120 may be in a form of the communication apparatus 700 shown in FIG. 7.

For example, the processor 701 in the communication apparatus 700 shown in FIG. 7 may invoke the computer-executable instructions stored in the memory 703, to enable the communication apparatus 700 to perform the communication method in the foregoing method embodiments.

Specifically, a function/an implementation process of the transceiver module 1202 and the processing module 1201 in FIG. 12 may be implemented by the processor 701 in the communication apparatus 700 shown in FIG. 7 by invoking the computer-executable instructions stored in the memory 703. Alternatively, a function/an implementation process of the processing module 1201 in FIG. 12 may be implemented by the processor 701 in the communication apparatus 700 shown in FIG. 7 by invoking the computer-executable instructions stored in the memory 703, and a function/an implementation process of the transceiver module 1202 in FIG. 12 may be implemented by the communication interface 704 in the communication apparatus 700 shown in FIG. 7.

The terminal device 120 provided in this embodiment of this application can perform the foregoing communication method. Therefore, for technical effects that can be achieved by the terminal device 120, refer to the foregoing method embodiments. Details are not described herein again.

It should be understood that one or more of the modules or units may be implemented by software, hardware, or a combination thereof. When any one of the foregoing modules or units is implemented by software, the software exists in a form of computer program instructions, and is stored in the memory. The processor may be configured to execute the program instructions and implement the foregoing method procedures. The processor may be built in a SoC (system on chip) or an ASIC, or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

In a possible implementation, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include a memory. When the communication apparatus is a chip system, the communication device may include a chip, or may include a chip and another discrete device. This is not specifically limited in this embodiment of this application.

In a possible implementation, an embodiment of this application further provides a computer-readable storage medium. The computer-readable storage medium stores a computer program or instructions. When the computer program or the instructions are run on a communication apparatus, the communication apparatus is caused to perform the method in any one of the foregoing method embodiments or any implementation of the foregoing method embodiments.

In a possible implementation, an embodiment of this application further provides a communication method. The communication method includes the method in any one of the foregoing method embodiments or any implementation of the method embodiment.

In a possible implementation, an embodiment of this application further provides a communication system. The communication system includes the terminal device in the foregoing method embodiment.

All or some of the foregoing embodiments may be implemented by software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of the claims of this application and equivalent technologies thereof.

## Claims

1. A communication method, comprising:
triggering first information, wherein the first information is used to request an uplink resource used for transmission of first data, or the first information indicates first delay information of first data, wherein
the first data corresponds to M logical channels, the M logical channels are logical channels configured to report delay information, and M is a positive integer; and
canceling the triggering of the first information when a first condition is met, wherein the first condition is related to a first uplink resource and the first data, and the first uplink resource is allocated for transmission of the first data.

2. The method according to claim 1, wherein the first condition comprises at least one of the following:
the first uplink resource bears transmission of the first data, and the first data comprises all pending data on the M logical channels; or
the first uplink resource bears transmission of the first data, and the first data comprises pending data that is on the M logical channels and whose remaining transmission delay budget is less than a threshold, wherein a start moment of the remaining transmission delay budget is a moment at which the first information is sent, and an end moment of the remaining transmission delay budget is a moment at which transmission of the pending data is expected to be completed, or an end moment of the remaining transmission delay budget is a moment at which the pending data is discarded.

3. The method according to claim 2, wherein when the first information indicates the first delay information of the first data, the first condition comprises: the first uplink resource bears transmission of the first data, and the first uplink resource does not bear transmission of the first information and a first subheader, wherein the first subheader corresponds to the first information.

4. The method according to any one of claims 1 to 3, wherein when the first information is used to request the uplink resource used for transmission of the first data, before the triggering the first information, the method further comprises:
triggering second information, wherein the second information indicates the first delay information of the first data; and
the triggering the first information comprises:
triggering the first information when no uplink resource exists in a first time period, wherein the first time period is determined based on a moment at which the second information is triggered and preset duration.

5. The method according to claim 4, wherein that no uplink resource exists in the first time period comprises any one of the following:
no dynamic resource indication information is received in the first time period;
dynamic resource indication information is received in the first time period or before a start moment of the first time period, and a resource use time period indicated by the dynamic resource indication information is not in the first time period; or
no semi-persistent uplink resource exists in the first time period.

6. The method according to claim 5, wherein the triggering the first information comprises:
triggering the first information at an end moment of the first time period.

7. The method according to claim 4, wherein that no uplink resource exists in the first time period comprises any one of the following:
dynamic resource indication information is received before a start moment of the first time period, and a resource use time period indicated by the dynamic resource indication information is not in the first time period; or
no semi-persistent uplink resource exists in the first time period.

8. The method according to claim 7, wherein the triggering the first information comprises:
triggering the first information at the start moment of the first time period.

9. The method according to any one of claims 1 to 8, wherein the M logical channels are all logical channels configured to report the delay information.

10. The method according to any one of claims 1 to 9, wherein the first information comprises a delay status report DSR.

11. The method according to claim 10, wherein the first information comprises a first DSR and a second DSR, the first DSR is a DSR triggered when first pending data meets a first configuration condition, the second DSR is a DSR triggered when second pending data meets a second configuration condition, the first pending data is pending data on a first logical channel, the second pending data is pending data on a second logical channel, and both the first logical channel and the second logical channel are in the M logical channels; and
the canceling the triggering of the first information when the first condition is met comprises:
canceling the first DSR and the second DSR when the first condition is met.

12. The method according to claim 10 or 11, wherein the DSR comprises delay information of pending data on the M logical channels.

13. The method according to any one of claims 10 to 12, wherein the first information comprises a scheduling request SR.

14. The method according to claim 13, wherein the first information comprises a first SR and a second SR, the first SR is an SR triggered when the first pending data meets a third configuration condition, the second SR is an SR triggered when the second pending data meets a fourth configuration condition, the first pending data is pending data on the first logical channel, the second pending data is pending data on the second logical channel, and both the first logical channel and the second logical channel are in the M logical channels; and
the canceling the triggering of the first information when the first condition is met comprises:
canceling the first SR and the second SR when the first condition is met.

15. The method according to claim 14, wherein when the first logical channel is the same as the second logical channel, an arrival moment of the first pending data is earlier than an arrival moment of the second pending data.

16. A communication apparatus, configured to implement the method according to any one of claims 1 to 15.

17. The communication apparatus according to claim 16, wherein the communication apparatus comprises user equipment UE or a chip.

18. A computer-readable storage medium, wherein the computer-readable storage medium stores computer instructions or a computer program, and when the computer instructions or the computer program is run, the method according to any one of claims 1 to 15 is performed.
